# EUROPEAN PATENT APPLICATION

(11) **EP 4 307 754 A1**
(43) Date of publication of application: **17.01.2024**
(21) Application number: 22778852.8
(22) Date of filing: 28.03.2022
(51) Int. Cl.: H04W 24/02

(54) **MOBILITY MANAGEMENT METHOD AND COMMUNICATION APPARATUS**

(30) Priority: 02.04.2021 CN 202110361426
(71) Applicant: Huawei Technologies Co., Ltd., Longgang Shenzhen, Guangdong 518129 (CN)
(72) Inventor: LOU, Chong, Shenzhen, Guangdong 518129 (CN); YOU, Chunhua, Shenzhen, Guangdong 518129 (CN); GU, Zhifang, Shenzhen, Guangdong 518129 (CN)
(74) Representative: Pfenning, Meinig & Partner mbB
(86) International application number: PCT/CN2022/083359
(87) International publication number: WO 2022/206670

(57) **Abstract**

A mobility management method and a communication apparatus are provided. The method includes: A terminal device measures a downlink reference signal of a first cell and a downlink reference signal of a second cell, and reports an obtained first measurement result to an access network device. The access network device sends, based on the first measurement result, at least one piece of beam information to the terminal device. The terminal device performs mobility management based on the at least one piece of beam information. The at least one piece of beam information includes beam information of the first cell and/or the second cell, the first cell is a cell serving the terminal device, the second cell is a cell other than the first cell, and the access network device is an access network device to which the first cell or the second cell belongs. In the foregoing technical solution, the terminal device can quickly determine a target cell during mobility management, and align with a beam direction of the target cell, thereby effectively shortening a handover delay and simplifying signaling overheads.

## Description

### CROSS-REFERENCE TO RELATED APPLICATIONS

This application claims priority to Chinese Patent Application No. 202110361426.X, filed with the China National Intellectual Property Administration on April 2, 2021 and entitled "MOBILITY MANAGEMENT METHOD AND COMMUNICATION APPARATUS", which is incorporated herein by reference in its entirety.

### TECHNICAL FIELD

This application relates to the field of wireless communication technologies, and in particular, to a mobility management method and a communication apparatus.

### BACKGROUND

In a high-frequency beamforming scenario, because a terminal device moves and a beam coverage area is limited, the terminal device needs to frequently perform cell handover. However, beam management cannot be performed on a target cell involved in a mobility process of the terminal device in a current beam management mechanism. Therefore, the terminal device usually needs to first perform the mobility process, and then perform a beam management process of the target cell. The mobility process and the beam management process not only cause long service interruption of the terminal device, but also cannot quickly match movement of the terminal device and implement fast beam alignment. This may further cause incorrect handover decision and a long beam training process.

### SUMMARY

A mobility management method and a communication apparatus in embodiments of this application are used to implement beam management in a mobility management process of a terminal device, so that a handover delay is effectively reduced, and signaling overheads are simplified.

According to a first aspect, an embodiment of this application provides a mobility management method. The method may be performed by a terminal device, or may be performed by a component (for example, a chip or a circuit) configured in the terminal device.

The method includes: The terminal device measures a downlink reference signal of a first cell and a downlink reference signal of a second cell, and reports an obtained first measurement result to an access network device, where the first cell is a cell serving the terminal device, the second cell is a cell other than the first cell, and the access network device is an access network device to which the first cell or the second cell belongs; the terminal device receives at least one piece of beam information from the access network device, where the at least one piece of beam information includes beam information of the first cell and/or the second cell; and the terminal device performs mobility management based on the at least one piece of beam information.

In the foregoing technical solution, the terminal device may measure reference signals of a plurality of cells, and report, to the access network device, a first measurement result obtained through measurement. The access network device may determine a target cell of the terminal device and at least one corresponding beam direction based on the received first measurement result, and notify the terminal device of the target cell and the corresponding beam direction by sending at least one piece of beam information to the terminal device. In this way, the terminal device may determine the target cell based on the at least one piece of beam information, and perform mobility management on the target cell, so that the terminal device can quickly align with a beam direction of the target cell, thereby effectively shortening a delay in a mobility management process and simplifying signaling overheads.

In a possible design of the first aspect, the method further includes: The terminal device sends an uplink reference signal of the first cell and an uplink reference signal of the second cell to the access network device.

In a possible design of the first aspect, that the terminal device performs mobility management based on the at least one piece of beam information includes: The terminal device performs, based on the at least one piece of beam information, any one of the following operations:
camping on the first cell and performing data transmission by using the first cell; handing over to the second cell; determining the second cell as a secondary cell; and camping on the first cell and performing data transmission by using the second cell.

In a possible design of the first aspect, that the terminal device performs, based on the at least one piece of beam information, any one of the following operations includes: if the at least one piece of beam information includes the beam information of the second cell, handing over the terminal device to the second cell, or determining the second cell as the secondary cell, or camping on the first cell and performing data transmission by using the second cell, or camping on the first cell and performing data transmission by using the first cell in a beam direction of the second cell.

In a possible design of the first aspect, the method further includes: The terminal device establishes a communication connection to the second cell, and communicates with the second cell in the beam direction indicated by the beam information of the second cell.

In a possible design of the first aspect, that the terminal device performs, based on the at least one piece of beam information, any one of the following operations includes: If the at least one piece of beam information includes the beam information of the first cell, the terminal device camps on the first cell and performs data transmission by using the first cell.

In a possible design of the first aspect, the method further includes: The terminal device communicates with the first cell in the beam direction indicated by the beam information of the first cell.

In a possible design of the first aspect, the at least one piece of beam information includes downlink beam indication information and/or uplink beam indication information.

In a possible design of the first aspect, the method further includes: The terminal device receives activation indication information from the access network device, where the activation indication information indicates to activate a reference signal of the first cell and a reference signal of the second cell.

In a possible design of the first aspect, the method further includes: The terminal device receives first configuration information from an access network device to which the first cell belongs, where the first configuration information includes a group of configuration information corresponding to the first cell and a group of configuration information corresponding to the second cell, and each group of configuration information includes one or more of the following information of a corresponding cell: reference signal configuration information, measurement reporting configuration information, beam configuration information, or quasi co-location information.

In a possible design of the first aspect, the measurement reporting configuration information includes one or more of a reference signal measurement and reporting period, a condition, a resource, a hysteresis factor, and result filtering information.

In a possible design of the first aspect, each group of configuration information further includes one or more of the following information of the corresponding cell: control resource set configuration information, search space configuration information, timing advance information, or identification information allocated by the corresponding cell to the terminal device.

In a possible design of the first aspect, the method further includes: The terminal device reports the first measurement result after one or more of the following trigger conditions are met: handover indication information delivered by the access network device to which the first cell belongs is received; in the first measurement result, a signal quality of the downlink reference signal of the second cell is higher than a specified threshold; in the first measurement result, a signal quality of the downlink reference signal of the second cell is higher than the specified threshold within a time period corresponding to the hysteresis factor; in the first measurement result, the signal quality of the downlink reference signal of the second cell is higher than the signal quality of the downlink reference signal of the first cell; in the first measurement result, the signal quality of the downlink reference signal of the second cell is higher than the signal quality of the downlink reference signal of the first cell within the time period corresponding to the hysteresis factor; in the first measurement result, the signal quality of the downlink reference signal of the second cell is higher than a sum of the signal quality of the downlink reference signal of the first cell, and a bias value; and in the first measurement result, the signal quality of the downlink reference signal of the second cell is higher than a sum of the signal quality of the downlink reference signal of the first cell within the time period corresponding to the hysteresis factor, and the set bias value.

According to a second aspect, an embodiment of this application provides a mobility management method. The method may be performed by an access network device, or may be performed by a component (for example, a chip or a circuit) configured in the access network device.

The method includes: The access network device receives a first measurement result obtained by measuring, by a terminal device, a downlink reference signal of a first cell and a downlink reference signal of a second cell, where the first cell is a cell serving the terminal device, the second cell is a cell other than the first cell, and the access network device is an access network device to which the first cell or the second cell belongs; the access network device determines at least one piece of beam information based on the first measurement result, where the at least one piece of beam information includes beam information of the first cell and/or the second cell; and the access network device sends the at least one piece of beam information to the terminal device, where the at least one piece of beam information is used by the terminal device to perform mobility management.

In a possible design of the second aspect, the method further includes: The access network device measures an uplink reference signal of the first cell and an uplink reference signal of the second cell that are sent by the terminal device, to obtain a second measurement result; and that the access network device determines at least one piece of beam information based on the first measurement result includes: The access network device determines the at least one piece of beam information based on the first measurement result and the second measurement result.

In a possible design of the second aspect, the at least one piece of beam information includes downlink beam indication information and/or uplink beam indication information.

In a possible design of the second aspect, the method further includes: The access network device sends activation indication information to the terminal device, where the activation indication information indicates to activate a reference signal of the first cell and a reference signal of the second cell.

In a possible design of the second aspect, the access network device is the access network device to which the first cell belongs, and the method further includes: The access network device sends first configuration information to the terminal device by using the first cell, where the first configuration information includes a group of configuration information corresponding to the first cell and a group of configuration information corresponding to the second cell, and each group of configuration information includes one or more of the following information of a corresponding cell: reference signal configuration information, measurement reporting configuration information, beam configuration information, or quasi co-location information.

In a possible design of the second aspect, the measurement reporting configuration information includes one or more of a reference signal measurement and reporting period, a condition, a resource, a hysteresis factor, and result filtering information.

In a possible design of the second aspect, each group of configuration information further includes one or more of the following information of the corresponding cell: control resource set configuration information, search space configuration information, timing advance information, or identification information allocated by the corresponding cell to the terminal device.

In a possible design of the second aspect, the method further includes: The access network device receives second configuration information from the access network device to which the second cell belongs, where the second configuration information includes a group of configuration information corresponding to the second cell.

According to a third aspect, an embodiment of this application provides a mobility management method. The method may be performed by a DU, or may be performed by a component (for example, a chip or a circuit) configured in the DU.

The method includes: The DU sends a first notification message to a CU, where the first notification message notifies the CU of decision information, the decision information indicates a terminal device to camp on a first cell and perform data transmission by using the first cell, or indicates a terminal device to hand over to a second cell, or indicates to determine a second cell as a secondary cell of a terminal device, or indicates a terminal device to camp on a first cell and perform data transmission by using a second cell, or indicates a terminal device to camp on a first cell and perform data transmission by using the first cell in a beam direction of a second cell, the first cell is a cell serving the terminal device, and the second cell is a cell other than the first cell; and the DU receives a first response message from the CU, where the first response message indicates that the first notification message is successfully received.

In the foregoing technical solution, mobility management policies of the CU and the DU for the terminal device can be consistent.

In a possible design of the third aspect, the method further includes: if the decision information indicates the terminal device to hand over to the second cell, or indicates to determine the second cell as a secondary cell of the terminal device, or indicates the terminal device to camp on the first cell and perform communication by using the second cell, the first notification message includes one or more of the following information: identification information of the second cell, beam information of the second cell, or a signal quality of a reference signal of the second cell.

According to a fourth aspect, an embodiment of this application provides a mobility management method. The method may be performed by a CU, or may be performed by a component (for example, a chip or a circuit) configured in the CU.

The method includes: The CU receives a first notification message from a DU, where the first notification message notifies the CU of decision information, the decision information indicates a terminal device to camp on a first cell and perform data transmission by using the first cell, or indicates a terminal device to hand over to a second cell, or indicates to determine a second cell as a secondary cell of a terminal device, or indicates a terminal device to camp on a first cell and perform data transmission by using a second cell, or indicates a terminal device to camp on a first cell and perform data transmission by using the first cell in a beam direction of a second cell, the first cell is a cell serving the terminal device, and the second cell is a cell other than the first cell; and the CU sends a first response message to the DU, where the first response message indicates that the first notification message is successfully received.

In a possible design of the fourth aspect, if the decision information indicates the terminal device to hand over to the second cell, or indicates to determine the second cell as the secondary cell of the terminal device, or indicates the terminal device to camp on the first cell and perform communication by using the second cell, the first notification message includes one or more of the following information: identification information of the second cell, beam information of the second cell, or a signal quality of a reference signal of the second cell.

According to a fifth aspect, an embodiment of this application provides a mobility management method. The method may be performed by a DU, or may be performed by a component (for example, a chip or a circuit) configured in the DU.

The method includes: The DU sends a second request message to a CU, where the second request message requests to perform mobility management on a terminal device, the second request message includes a signal quality of a reference signal of a first cell and a signal quality of a reference signal of a second cell, the first cell is a cell serving the terminal device, and the second cell is a cell other than the first cell; and the DU receives a second response message from the CU, where the second response message notifies the DU of decision information, and the decision information indicates the terminal device to camp on the first cell and perform communication by using the first cell, or indicates the terminal device to hand over to the second cell, or indicates to determine the second cell as a secondary cell of the terminal device, or indicates the terminal device to camp on the first cell and perform data transmission by using the second cell, or indicates the terminal device to camp on the first cell and perform data transmission by using the first cell in a beam direction of the second cell.

In a possible design of the fifth aspect, the second request message further includes identification information of the first cell and identification information of the second cell.

In a possible design of the fifth aspect, if the decision information indicates the terminal device to hand over to the second cell, or indicates to determine the second cell as the secondary cell of the terminal device, or indicates the terminal device to camp on the first cell and perform communication by using the second cell, the second response message includes one or more of the following information: identification information of the second cell, beam information of the second cell, or a signal quality of a reference signal of the second cell.

According to a sixth aspect, an embodiment of this application provides a mobility management method. The method may be performed by a CU, or may be performed by a component (for example, a chip or a circuit) configured in the CU.

The method includes: The CU receives a second request message from a DU, where the second request message requests to perform mobility management on a terminal device, the second request message includes a signal quality of a reference signal of a first cell and a signal quality of a reference signal of a second cell, the first cell is a cell serving the terminal device, and the second cell is a cell other than the first cell; the CU determines decision information based on the signal quality of the reference signal of the first cell and the signal quality of the reference signal of the second cell, where the decision information indicates the terminal device to camp on the first cell and perform data transmission by using the first cell, or indicates the terminal device to hand over to the second cell, or indicates to determine the second cell as a secondary cell of the terminal device, or indicates the terminal device to camp on the first cell and perform data transmission by using the second cell, or indicates the terminal device to camp on the first cell and perform data transmission by using the first cell in a beam direction of the second cell; and the CU sends a second response message to the DU, where the first response message notifies the DU of the decision information.

In a possible design of the sixth aspect, the second request message further includes identification information of the first cell and identification information of the second cell.

In a possible design of the sixth aspect, if the decision information indicates the terminal device to hand over to the second cell, or indicates to determine the second cell as the secondary cell of the terminal device, or indicates the terminal device to camp on the first cell and perform communication by using the second cell, the second response message includes one or more of the following information: identification information of the second cell, beam information of the second cell, or a signal quality of a reference signal of the second cell.

According to a seventh aspect, an embodiment of this application provides a communication apparatus. The communication apparatus may have functions of implementing the terminal device in the foregoing aspects. The communication apparatus may be a terminal device, or may be a chip included in a terminal device.

Alternatively, the communication apparatus may have functions of implementing the access network device in the foregoing aspects. The communication apparatus may be an access network device, or may be a chip included in an access network device.

The functions of the communication apparatus may be implemented by hardware, or may be implemented by hardware executing corresponding software. The hardware or the software includes one or more modules, units, or means (means) corresponding to the functions.

In a possible design, a structure of the communication apparatus includes a processing module and a transceiver module. The processing module is configured to support the communication apparatus in performing corresponding functions of the terminal device in the foregoing aspects, or performing corresponding functions of the access network device in the foregoing aspects. The transceiver module is configured to support communication between the communication apparatus and another communication device. For example, when the communication apparatus is a terminal device, the communication apparatus may receive at least one piece of beam information from an access network device. The communication apparatus may further include a storage module. The storage module is coupled to the processing module, and stores program instructions and data that are necessary for the communication apparatus. In an example, the processing module may be a processor, a communication module may be a transceiver, and the storage module may be a memory. The memory may be integrated with the processor, or may be disposed separately from the processor.

In another possible design, a structure of the communication apparatus includes a processor, and may further include a memory. The processor is coupled to the memory, and may be configured to execute the computer program instructions stored in the memory, so that the communication apparatus performs the methods in the foregoing aspects. Optionally, the communication apparatus further includes a communication interface, and the processor is coupled to the communication interface. When the communication apparatus is a terminal device or network device, the communication interface may be a transceiver or an input/output interface. When the communication apparatus is a chip included in the terminal device or a chip included in the network device, the communication interface may be an input/output interface of the chip. Optionally, the transceiver may be a transceiver circuit, and the input/output interface may be an input/output circuit.

According to an eighth aspect, an embodiment of this application provides a chip system, including a processor, where the processor is coupled to a memory, the memory is configured to store a program or instructions, and when the program or the instructions are executed by the processor, the chip system is enabled to implement the methods in the foregoing aspects.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a ninth aspect, an embodiment of this application provides a computer-readable storage medium, where the computer-readable storage medium stores a computer program or instructions, and when the computer program or the instructions are executed, a communication apparatus is enabled to perform the method in any one of the foregoing aspects or the possible designs of the foregoing aspects.

According to a tenth aspect, an embodiment of this application provides a computer program product. When a communication apparatus executes the computer program product, the communication apparatus is enabled to perform the method in any one of the foregoing aspects or the possible designs of the foregoing aspects.

According to an eleventh aspect, an embodiment of this application provides a communication system. The communication system includes an access network device and at least one terminal device. Optionally, the communication system may further include a core network device.

### BRIEF DESCRIPTION OF DRAWINGS

FIG. 1 is a schematic diagram of a network architecture of a communication system to which this application is applicable;
FIG. 2 is a schematic flowchart of a mobility management method according to an embodiment of this application;
FIG. 3 is a schematic flowchart of performing mobility management based on handover indication information according to an embodiment of this application;
FIG. 4 is a schematic diagram of exchanging, by a first access network device and a second access network device, configuration information of respective cells in a cross-station mobility management scenario according to an embodiment of this application;
FIG. 5 is a schematic diagram of measuring a reference signal and reporting a measurement result by a terminal device according to an embodiment of this application;
FIG. 6 is a schematic flowchart of another mobility management method according to an embodiment of this application;
FIG. 7 is a schematic flowchart of still another mobility management method according to an embodiment of this application; and
FIG. 8, FIG. 9, and FIG. 10 each are a schematic diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The technical solutions in embodiments of this application may be applied to various communication systems, such as a universal mobile telecommunication system (universal mobile telecommunication system, UMTS), a code division multiple access (code division multiple access, CDMA) system, a wireless local area network (WLAN, wireless local area network), a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a future communication system, or another similar communication system.

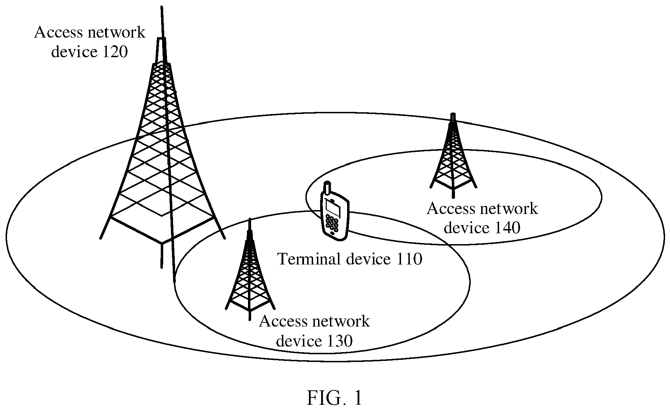

FIG. 1 is a schematic diagram of a network architecture of a communication system according to this application. The communication system includes an access network device and a terminal device. The terminal device is located within coverage of one or more cells (carriers) provided by the access network device, and there may be one or more cells that serve the terminal device. When there are a plurality of cells that serve the terminal device, the terminal device may work in a carrier aggregation (carrier aggregation, CA) manner, a dual connectivity (dual connectivity, DC) manner, or a coordinated multipoint transmission/reception (coordinated multipoint transmission/reception, CoMP) manner. At least one cell is configured to provide more than one transmission parameter set (numerology) to provide radio resources for the terminal device at the same time. For example, as shown in FIG. 1, a terminal device 110 is located in a cell of an access network device 120, a cell of the access network device 130, and a cell of an access network device 140 at the same time. The access network device 120 may be a macro base station (for example, a macro eNB), and the access network device 130 and the access network device 140 may be micro base stations (for example, small eNBs).

It should be noted that FIG. 1 is merely a schematic diagram. The communication system may further include other network devices such as a core network device, a wireless relay device, and a wireless backhaul device, which are not shown in FIG. 1.

Quantities of access network devices, terminal devices, core network devices, and other network devices included in the communication system are not limited in embodiments of this application.

The access network device in embodiments of this application may correspond to different devices in communication systems of different types or standards. For example, in a 5G system, the access network device corresponds to an access network device (for example, a gNB or an ng-eNB) in 5G. In a 4G system, the access network device corresponds to an access network device (for example, an eNB or an en-gNB) in 4G.

The access network device and the terminal device may communicate with each other by using a licensed spectrum, or may communicate with each other by using an unlicensed spectrum, or may communicate with each other by using both a licensed spectrum and an unlicensed spectrum. The access network device and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. Spectrum resources used between the access network device and the terminal device are not limited in embodiments of this application.

The access network device and the terminal device in embodiments of this application may be deployed on land, including an indoor or outdoor device, a handheld device, or a vehicle-mounted device; or may be deployed on a water surface; or may be deployed on a plane, a balloon, or an artificial satellite in the air. Application scenarios of the access network device and the terminal device are not limited in embodiments of this application.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The following describes some terms in embodiments of this application, to facilitate understanding of a person skilled in the art.
(1) The terminal device in embodiments of this application may also be referred to as a terminal, user equipment (user equipment, UE), a mobile station, a mobile terminal, or the like, and is a device that provides a user with voice and/or data connectivity, for example, a handheld device or a vehicle-mounted device having a wireless connection function. The terminal device is connected to the access network device in a wireless manner, to access the communication system. Currently, for example, the terminal device includes a mobile phone, a tablet computer, a computer having a wireless transceiver function, a palmtop computer, a mobile internet device, a wearable device, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

As an example rather than a limitation, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, such as glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, such as smart watches or smart glasses, and include devices that focus on only one type of application function and need to collaboratively work with other devices such as smartphones, for example, various smart bands, smart helmets, or smart jewelry for monitoring physical signs.

The terminal device may alternatively be a vehicle-mounted module, a vehicle-mounted component, a vehicle-mounted chip, or a vehicle-mounted unit that is built in a vehicle as one or more components or units. The vehicle may use the vehicle-mounted module, a vehicle-mounted module assembly, the vehicle-mounted component, the vehicle-mounted chip, or the vehicle-mounted unit that is built in the vehicle to implement the method in this application.

(2) The access network device in embodiments of this application may also be referred to as a base station, and is a node or a device in a radio access network (radio access network, RAN) configured to connect a terminal device to a wireless network. Currently, for example, the access network device includes: a base station (base station), an evolved NodeB (evolved NodeB, eNB) in an LTE system or an evolved LTE system (LTE-Advanced, LTE-A), a next generation NodeB (next generation NodeB, gNB) in a 5G communication system, a transmission reception point (transmission reception point, TRP), a NodeB (NodeB, NB), a radio network controller (radio network controller, RNC), a base station controller (base station controller, BSC), a base transceiver station (base transceiver station, BTS), a home (evolved) NodeB (home (evolved) NodeB, HNB), a base band unit (base band unit, BBU), a wireless fidelity (wireless fidelity, Wi-Fi) access point (access point, AP), a base station in a future mobile communication system, or the like. The access network device may alternatively be a module or a unit that completes some functions of the base station. For example, the access network device may be a central unit (central unit, CU) or a distributed unit (distributed unit, DU). A specific technology and a specific device form used by the access network device are not limited in embodiments of this application.

For example, in a network structure, the access network device may be a CU node or a DU node, or an access network device including a CU node and a DU node. The CU node may support functions of a radio resource control (radio resource control, RRC), a packet data convergence protocol (packet data convergence protocol, PDCP), and a service data adaptation protocol (service data adaptation protocol, SDAP). The DU node may support functions of a radio link control (radio link control, RLC) layer protocol, a media access control (medium access control, MAC) layer protocol, and a physical layer protocol.

It should be noted that the terms "system" and "network" may be used interchangeably in embodiments of this application. "A plurality of" means two or more. In view of this, "a plurality of" in embodiments of this application may also be understood as "at least two". "At least one" may be understood as one or more, for example, one, two, or more. For example, "including at least one" means including one, two, or more, and there is no limitation on which is included. For example, if at least one of A, B, and C is included, A, B, C, A and B, A and C, B and C, or A, B, and C may be included. Similarly, understanding of the descriptions such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

The following explains and describes related technical features in embodiments of this application.

A control resource set (control resource set, CORESET) may be understood as a time-frequency resource set, indicates a resource location for physical downlink control channel (physical downlink control channel, PDCCH) transmission, and includes a quantity of time domain symbols occupied by a PDCCH, a quantity of resource blocks in frequency domain, slot allocation, and the like. In time domain, one CORESET may be configured as one or several consecutive OFDM symbols. In frequency domain, one CORESET may be a group of consecutive or nonconsecutive frequency domain resources, and includes search spaces at different aggregation levels.

A search space (search space, SS) indicates an occurrence period and specific resource information of a CORESET, for example, a start slot and a symbol, and a recurrence period, so that the terminal device can monitor a PDCCH at an indicated resource location of the search space, and one search space can be associated with at least one CORESET.

Beam management (beam management): A plurality of antennas are used for beamforming. By changing a phase and amplitude of a signal from each antenna, a beam can be directed to a specific direction. In the NR system, sending and receiving on all uplink and downlink channels are based on beams. Therefore, beam management needs to be performed, so that a transmit end and a receive end can receive and send data on a most appropriate beam, thereby improving signal strength, avoiding signal interference, and improving communication quality.

A beam management mechanism may include the following process: (1) Beam scanning: Spatial scanning is performed on a beam for sending a reference signal at a predefined time interval. (2) Beam measurement/decision: The terminal device measures a reference signal, and selects a best beam. (3) Beam report: The terminal device reports a beam measurement result. (4) Beam indication: The access network device indicates the terminal device to select a specified beam.

A reference signal used for beam management may include a synchronization signal and physical broadcast channel block (synchronization signal and physical broadcast channel block, SSB) in a downlink direction, a channel state information reference signal (channel state information reference signal, CSI-RS), and a PRACH and a channel sounding reference signal (sounding reference signal, SRS) in an uplink direction. The SSB is applicable to an idle-mode initial access state or a connected mode, the PRACH is applicable to an idle-mode initial access state, and the CSI-RS and the SRS is applicable to a connected mode.

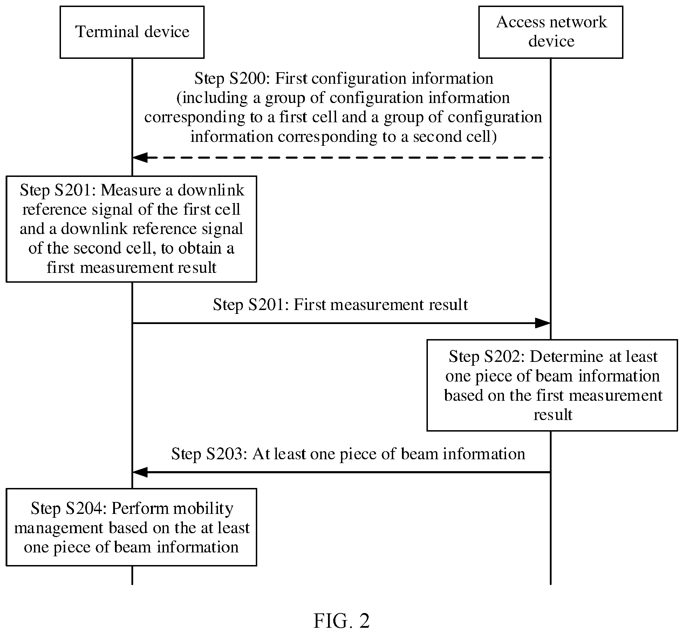

FIG. 2 is a schematic flowchart of a mobility management method according to an embodiment of this application. The method includes the following steps.

Step S201: A terminal device measures a downlink reference signal of a first cell and a downlink reference signal of a second cell, and reports an obtained first measurement result to an access network device.

Correspondingly, the access network device receives the first measurement result obtained by the terminal device by measuring the downlink reference signal of the first cell and the downlink reference signal of the second cell.

In this embodiment of this application, the terminal device may further send an uplink reference signal of the first cell and an uplink reference signal of the second cell to the access network device. Correspondingly, the access network device may measure the uplink reference signal of the first cell and the uplink reference signal of the second cell that are sent by the terminal device, to obtain a second measurement result.

The access network device is an access network device to which the first cell or the second cell belongs. The first cell is a cell currently serving the terminal device, and may also be referred to as a serving cell of the terminal device. The second cell is a cell other than the first cell, and may be a cell that currently does not serve the terminal device, or may be another cell that currently serves the terminal device. This is not limited.

For example, if the terminal device currently accesses only one cell (that is, there is one cell currently serving the terminal device), the first cell is the cell currently accessed by the terminal device, and the second cell is another cell that is not currently accessed by the terminal device. If the terminal device simultaneously accesses a plurality of cells (that is, there are a plurality of cells currently serving the terminal device) in a carrier aggregation manner or dual connectivity manner, the first cell is a primary cell or a secondary cell that is accessed by the terminal device in a carrier aggregation scenario or a dual connectivity scenario, or may be understood as a cell in which data is currently transmitted, and the second cell is a cell other than the primary cell or the secondary cell, or may be understood as another cell in which no data is currently transmitted. If the terminal device simultaneously accesses a plurality of cells in a multi-TRP (multi-TRP) manner, the first cell is a cell in which the terminal device currently performs data transmission, and the second cell is another cell in which the terminal device currently does not perform data transmission.

It should be noted that the first cell and the second cell may belong to a same access network device, or may belong to different access network devices. This is not limited in this application. For ease of understanding, in the following description of this application, the access network device to which the first cell belongs is referred to as a first access network device, and the access network device to which the second cell belongs is referred to as a second access network device.

If the first cell and the second cell belong to a same access network device, it indicates that the first access network device and the second access network device are a same access network device (namely, the access network device that currently provides a service for the terminal device). This corresponds to a co-site mobility management scenario.

In the co-site mobility management scenario, the terminal device may report the first measurement result to the access network device by using the first cell or the second cell. Similarly, the terminal device may send the uplink reference signal of the first cell to the access network device by using the first cell, and may send the uplink reference signal of the second cell to the access network device by using the second cell. In this way, the access network device may receive and measure the uplink reference signal of the first cell and the uplink reference signal of the second cell, to obtain the second measurement result.

If the first cell and the second cell belong to different access network devices, it indicates that the first access network device and the second access network device are different access network devices. This corresponds to a cross-site mobility management scenario. Further, in the cross-site mobility management scenario, the first access network device may also be referred to as a source access network device (or a source station), and is an access network device that currently provides a service for the terminal device. The second access network device may also be referred to as a target access network device (or a target station), and is an access network device to which the terminal device is to be handed over or an access network device to which the terminal device is ready to be handed over.

In the cross-site mobility management scenario, the terminal device may report the first measurement result to the first access network device by using the first cell, or may report the first measurement result to the second access network device by using the second cell. Similarly, the terminal device may send the uplink reference signal of the first cell to the first access network device by using the first cell, and may send the uplink reference signal of the second cell to the second access network device by using the second cell. In this way, the first access network device and the second access network device may separately receive and measure the uplink reference signal, and obtain the second measurement result by exchanging a measurement result of the uplink reference signal of each cell.

It should be noted that there may be one or more second cells in this embodiment of this application. If there are a plurality of second cells, different second cells may belong to a same second access network device, or may belong to different second access network devices. In other words, there are also a plurality of second access network devices. When there are a plurality of second cells, for mobility management of the terminal device, refer to the method implementation provided in this application. Details are not described again.

Step S202: The access network device determines at least one piece of beam information based on the first measurement result.

Step S203: The access network device sends the at least one piece of beam information to the terminal device.

Correspondingly, the terminal device receives the at least one piece of beam information from the access network device.

The at least one piece of beam information includes beam information of the first cell and/or the second cell. The beam information of the first cell may include downlink beam indication information and/or uplink beam indication information. The downlink beam indication information of the first cell indicates at least one downlink beam direction of the first cell, for example, may include TCI status information of at least one physical channel of the first cell, such as a PDCCH, a physical downlink shared channel (physical downlink shared channel, PDSCH), a physical uplink control channel (physical uplink control channel, PUCCH), or a physical uplink shared channel (physical uplink shared channel, PUSCH). The uplink beam indication information of the first cell indicates at least one uplink beam direction of the first cell, for example, may include an identifier of at least one uplink reference signal such as an SRS or an SSB of the first cell. It may be understood that, for the terminal device, the at least one downlink beam direction of the first cell is a beam direction of at least one receive beam corresponding to the first cell, and the at least one uplink beam direction of the first cell is a beam direction of at least one transmit beam corresponding to the first cell.

Similarly, the beam information of the second cell may also include downlink beam indication information and/or uplink beam indication information. The downlink beam indication information of the second cell indicates at least one downlink beam direction of the second cell, for example, may include TCI status information of at least one physical channel of the second cell, such as a PDCCH, a PDSCH, a PUCCH, or a PUSCH. The uplink beam indication information of the second cell indicates at least one uplink beam direction of the second cell, for example, may include an identifier of at least one uplink reference signal such as an SRS or an SSB of the second cell. It may be understood that, for the terminal device, the at least one downlink beam direction of the second cell is a beam direction of at least one receive beam corresponding to the second cell, and the at least one uplink beam direction of the second cell is a beam direction of at least one transmit beam corresponding to the second cell.

In this embodiment of this application, the access network device (namely, the first access network device or the second access network device) may determine the at least one piece of beam information based on the first measurement result and/or the second measurement result.

For example, the access network device may determine, based on the received first measurement result, at least one receive beam with a good channel condition of the terminal device, and a cell corresponding to the at least one receive beam. Optionally, in the co-site mobility management scenario, the access network device may determine, based on the second measurement result obtained through measurement, at least one transmit beam with a good channel condition of the terminal device, and a cell corresponding to the at least one transmit beam. Optionally, in the cross-site mobility management scenario, if the terminal device sends the uplink reference signal of the first cell by using the first cell, and sends the uplink reference signal of the second cell by using the second cell, the first access network device obtains a measurement result 1 by measuring the uplink reference signal of the first cell, and the second access network device obtains a measurement result 2 by measuring the uplink reference signal of the second cell. The first access network device and the second access network device may determine, through negotiation, at least one transmit beam with a good channel condition of the terminal device, and a cell corresponding to the at least one transmit beam. For example, the second access network device may notify the first access network device of the measurement result 2, so that the first access network device can determine, based on the measurement result 2, or with further reference to the measurement result 1, the at least one transmit beam with a good channel condition of the terminal device, and the cell corresponding to the at least one transmit beam. Similarly, the first access network device may notify the second access network device of the measurement result 1, so that the second access network device can determine, based on the measurement result 1, or with reference to the measurement result 2, the at least one transmit beam with a good channel condition of the terminal device, and the cell corresponding to the at least one transmit beam.

In this way, the access network device may send the determined better beam information of the at least one receive beam and/or transmit beam to the terminal device as the at least one piece of beam information, so that the terminal device determines a target cell to be accessed, and a corresponding receive beam direction and/or transmit beam direction.

Optionally, in the co-site mobility management scenario, the access network device may send the at least one piece of beam information to the terminal device by using the first cell or the second cell. In the cross-site mobility management scenario, if the terminal device reports the first measurement result to the first access network device by using the first cell, the first access network device may send the at least one piece of beam information to the terminal device by using the first cell. If the terminal device reports the first measurement result to the second access network device by using the second cell, the second access network device may send the at least one piece of beam information to the terminal device by using the second cell.

The at least one piece of beam information may be sent by the access network device to the terminal device by using physical layer signaling (for example, a PDCCH), an RRC message (for example, an RRC configuration message, an RRC setup message, or an RRC resume message), or a MAC control element (control element, CE) message. This is not limited in this application.

Step S204: The terminal device performs mobility management based on the at least one piece of beam information.

In this embodiment of this application, after receiving the at least one piece of beam information from the access network device, the terminal device may determine, based on the at least one piece of beam information, a target cell to be accessed, and perform corresponding mobility management.

The performing mobility management may be performing any one of the following operations:
(1) camping on the first cell and performing data transmission by using the first cell;
(2) handing over to the second cell;
(3) determining the second cell as a secondary cell;
(4) camping on the first cell and performing data transmission by using the second cell; and
(5) camping on the first cell and performing data transmission by using the first cell in a beam direction of the second cell, where, optionally, the beam direction of the second cell is indicated by the beam information of the second cell.

The determining the second cell as a secondary cell may mean adding or activating the second cell as a serving cell of the terminal device, or adding the second cell to a serving cell set of the terminal device. In this case, the first cell is a primary cell in the serving cell set, and the second cell is a secondary cell in the serving cell set. For example, the first cell and the second cell may form carrier aggregation CA, to jointly provide a service for the terminal device.

The camping on the first cell and performing data transmission by using the second cell may mean not adding or activating the second cell as a serving cell in a CA manner, but performing data transmission for the terminal device by using at least one transmission reception point (transmission reception point, TRP) of the second cell. Optionally, from a perspective of the terminal device, the serving cell is still the first cell, and a data transmission capability is additionally provided only by using the TRP of the second cell. For example, when the terminal device is located at an edge of the first cell, a signal quality is poor. When a signal quality of the second cell is good, the terminal device may not hand over to the second cell, and does not add or activate the second cell as a serving cell, but performs data communication with the second cell only by using a good beam of the second cell.

The camping on the first cell and performing data transmission by using the first cell in a beam direction of the second cell may mean not adding or activating the second cell as a serving cell in a CA manner, not performing data transmission for the terminal device by using the at least one TRP of the second cell, but still performing data transmission by using the first cell based on only the beam direction of the TRP of the second cell, to provide more beam direction choices for the terminal device. Optionally, from a perspective of the terminal device, the serving cell is still the first cell, and a reference beam direction is additionally provided only by using the TRP of the second cell. For example, when the terminal device determines, by measuring the downlink reference signal of the first cell and the downlink reference signal of the second cell, that a signal quality in the beam direction of the second cell is good, the terminal device may not hand over to the second cell, or may not add or activate the second cell as a serving cell, but perform data communication with the first cell only in a good beam direction of the second cell.

Specifically, the terminal device may perform any operation of the foregoing mobility management according to the following policy or processing logic.

If the at least one piece of beam information includes the beam information of the second cell, the terminal device may be handed over to the second cell, or determine the second cell as a secondary cell, or camp on the first cell and perform data transmission by using the second cell. Further, the terminal device may establish a communication connection to the second cell, and communicate with the second cell in the beam direction indicated by the beam information of the second cell, or camp on the first cell and perform data transmission by using the first cell in the beam direction of the second cell. Further, the terminal device communicates with the first cell in the beam direction indicated by the beam information of the second cell.

For example, in some possible solutions, if the terminal device determines to hand over from the first cell to the second cell, the terminal device may disconnect the communication connection to the first cell, establish a communication connection to the second cell, and communicate with the access network device (for example, the second access network device) by using the second cell. In some other possible solutions, if the terminal device determines to hand over from the first cell to the second cell, the terminal device may temporarily suspend (suspend) a communication connection between the terminal device and the first cell without disconnecting the communication connection to the first cell. For example, the terminal device may store a TCI status of the first cell without releasing configuration information, for example, the TCI status of the first cell. Therefore, when the terminal device is handed over back to the first cell, the terminal device may recover the communication connection to the first cell without re-establishing the communication connection to the first cell, for example, the configuration information, for example, the TCI status of the first cell does not need to be reconfigured, but the configuration information, for example, the TCI status of the first cell is directly restored for use. In this way, fast handover is implemented, and handover efficiency is improved. In some other possible solutions, if the terminal device determines to add or activate the second cell as a secondary cell, the access network device (for example, the first access network device) may schedule resources such as a PUSCH or a PDSCH of the second cell by using the PDCCH of the first cell, so that the terminal device can communicate with the second cell. In this case, the terminal device may maintain the TCI status of the PDCCH, and align receive beams by using the TCI status of the PDSCH and the TCI status of the PUSCH of the second cell.

Optionally, the terminal device may trigger random access to the second cell, or may not trigger random access to the second cell, and may directly communicate with the second cell based on configuration information of the second cell. The configuration information of the second cell is received by the terminal device from the first access network device. Content related to the configuration information of the second cell is described below in this application.

If the at least one piece of beam information includes the beam information of the first cell, the terminal device may camp on the first cell and perform data transmission by using the first cell. Further, the terminal device may communicate with the first cell in a beam direction indicated by the beam information of the first cell.

If the at least one piece of beam information includes the beam information of the first cell and the beam information of the second cell, the terminal device may determine, based on a preconfigured rule or autonomous selection, whether to camp on the first cell and perform data transmission by using the first cell, or to hand over to the second cell, or to add or activate the second cell as a secondary cell, or to camp on the first cell and perform data transmission by using the second cell, or to camp on the first cell and perform data transmission by using the first cell in the beam direction of the second cell.

For example, the terminal device may make a decision based on a measured signal quality of the downlink reference signal of the first cell and a measured signal quality of the downlink reference signal of the second cell. If the signal quality of the downlink reference signal of the second cell in the first measurement result is higher than the signal quality of the downlink reference signal of the first cell, the terminal device may choose to hand over to the second cell, or add or activate the second cell as a secondary cell, or perform data transmission with assistance of the second cell. Otherwise, the terminal device may camp on the first cell and continue to perform data transmission by using the first cell.

It should be noted that the signal quality of the reference signal mentioned in this application may be a cell-level signal quality, or may be a reference signal-level signal quality, which is not limited.

Optionally, if both the first cell and the second cell are cells that currently provide services for the terminal device, the terminal device may further exchange functions or roles of the first cell and the second cell. For example, in a possible solution, the first cell is a primary cell, and the second cell is a secondary cell. After receiving the at least one piece of beam information, the terminal device may change, based on the at least one piece of beam information, the first cell from the primary cell to the secondary cell, and change the second cell from the secondary cell to the primary cell. For example, the at least one function and related configuration of the first cell become invalid, including but not limited to random access, radio link detection, a PUCCH resource, and the like. The at least one function and related configuration of the second cell take effect, including but not limited to random access, radio link detection, a PUCCH resource, and the like. The effective time may be a moment after the at least one piece of beam information is received, or may be a sum of a moment after the at least one piece of beam information is received, and an offset value. The offset value may be agreed in a protocol or preconfigured by a base station device. For example, the at least one function and related configuration of the second cell may take effect after the terminal device receives the at least one piece of beam information and feeds back a receiving success response to the access network device.

It can be learned from the foregoing content that, in this embodiment of this application, the terminal device may measure reference signals of a plurality of cells, and report, to the access network device, the first measurement result obtained through measurement. The access network device may determine a target cell of the terminal device and at least one corresponding beam direction based on the received first measurement result, and notify the terminal device of the target cell and the corresponding beam direction by sending at least one piece of beam information to the terminal device. In this way, the terminal device may determine the target cell based on the at least one piece of beam information, and perform mobility management on the target cell, so that the terminal device can quickly align with a beam direction of the target cell, thereby effectively shortening a delay in a mobility management process and simplifying signaling overheads.

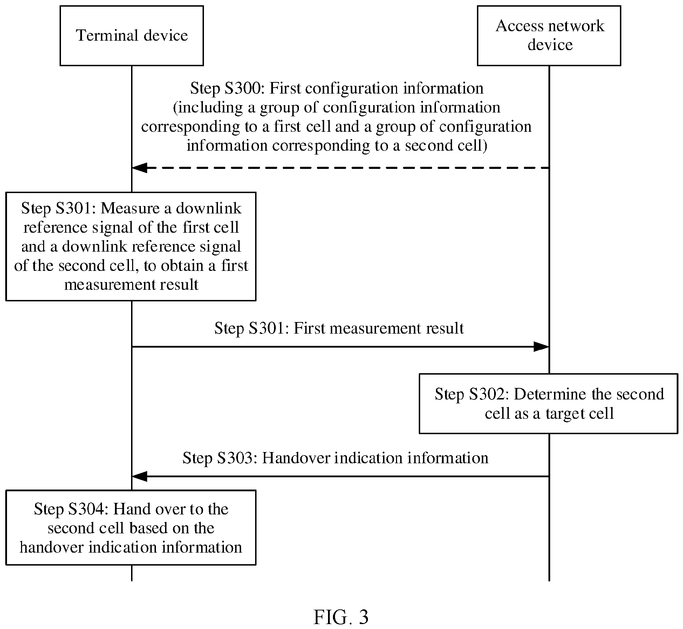

It should be noted that the access network device sends the at least one piece of beam information to the terminal device in step S203 and step S204, and the terminal device performs mobility management based on the at least one piece of beam information is a possible implementation provided in this embodiment of this application. In another possible implementation, as shown in FIG. 3, in step S302, the access network device determines the second cell as a target cell. In step S303, the access network device sends handover indication information to the terminal device, where the handover indication information indicates the terminal device to hand over from a first cell to a second cell. Optionally, the handover indication information may include a cell identifier of the second cell, for example, a physical cell identifier (physical cell identifier, PCI). For other steps (for example, steps S300, S301, and S304) shown in FIG. 3, refer to descriptions of corresponding steps in FIG. 2. Details are not described again.

For example, the access network device may determine, based on the received first measurement result and by considering a radio resource management (radio resource management, RRM) factor, the second cell as a target cell. For example, it may be determined, based on the first measurement result, that at least one receive beam with a good channel condition of the terminal device corresponds to the second cell. Alternatively, it may be determined, based on a radio resource management RRM algorithm and a load status, that the second cell is a light-loaded cell, and is more suitable for the terminal device to access. Alternatively, it may be determined that the second cell is a target cell when a serving access network device cannot accurately determine an optimal beam of the second cell, for example, when a target beam quickly changes due to a high moving speed of the terminal device, or when mobility of the terminal device is considered, for example, the terminal device may move to a coverage of the second cell.

In this way, after receiving the handover indication information, the terminal device may hand over to the second cell based on the handover indication information. Through the foregoing operations, the terminal device may first quickly access the second cell, to obtain an optimal target beam in the second cell.

The handover indication information may be sent by the access network device to the terminal device by using physical layer signaling (for example, a PDCCH), an RRC message (for example, an RRC configuration message, an RRC setup message, or an RRC resume message), or a MAC CE message. This is not limited in this application.

Optionally, after receiving the at least one piece of beam information or the handover indication information from the access network device, the terminal device may further correspondingly send a response message to the access network device. The response message, in response to the at least one piece of beam information or the handover indication information, indicates that the at least one piece of beam information or the handover indication information is successfully received. After receiving the response message, the access network device may consider that the terminal device has made a corresponding decision related to mobility management or has completed a mobility process, for example, handed over to the second cell, or added or activated the second cell as a secondary cell.

The response message may be physical layer signaling (for example, a PUCCH), or may be an RRC message, a MAC CE message, or the like. This is not limited in this application.

Because the second cell is a cell other than the first cell, the terminal device may not know a related configuration of the second cell, and therefore cannot measure a downlink reference signal of the second cell or send an uplink reference signal of the second cell. As shown in optional step S200 in FIG. 2, the first access network device may send first configuration information to the terminal device. The first configuration information includes a group of configuration information corresponding to the first cell and a group of configuration information corresponding to the second cell. Optionally, the first access network device may send the first configuration information by using the first cell.

Each group of configuration information may include one or more of the following information of a corresponding cell: reference signal configuration information, measurement reporting configuration information, beam indication information, quasi co-location (quasi co-location, QCL) information, control resource set CORESET configuration information, search space SS configuration information, timing advance (timing advance, TA) configuration information, terminal device identification information, random access resource configuration information, PUCCH resource configuration information, radio link monitoring configuration information, or security-related configuration information. That is, the group of configuration information corresponding to the first cell may include one or more types of configuration information of the first cell, and the group of configuration information corresponding to the second cell may include one or more types of configuration information of the second cell.

For brevity of description, in this application, a term "corresponding cell" is used in the following process of explaining and describing specific related configurations included in a group of configuration information. The corresponding cell is a cell corresponding to the group of configuration information. It may be understood that, when a group of configuration information corresponding to the first cell is mentioned, a corresponding cell is the first cell, and when a group of configuration information corresponding to the second cell is mentioned, a corresponding cell is the second cell.

Specifically, reference signal configuration information includes a related configuration of at least one reference signal of a corresponding cell, and the at least one reference signal may include an SSB, a CSI-RS, an SRS, and the like.

Optionally, the reference signal configuration information may further include information indicating an association relationship between the at least one reference signal and the corresponding cell, so that the terminal device identifies a specific reference signal as a reference signal of a specific cell. For example, the association relationship between the at least one reference signal and the corresponding cell may be indicated in the following two manners:

Manner 1: Explicit cell indication. The reference signal configuration information includes a cell identifier associated with the at least one reference signal. For example, if a reference signal 1 is associated with the first cell, and a reference signal 2 is associated with the second cell, reference signal configuration information of the first cell may include a cell identifier of the first cell, and reference signal configuration information of the second cell may include a cell identifier of the second cell. In this way, the terminal device may determine, based on a cell identifier in the reference signal configuration information, a cell associated with the reference signal.

Manner 2: Implicit cell indication. Reference signals are grouped based on associated cells. Reference signal configuration information includes group information of the at least one reference signal. The group information may be an identifier of a group in which a reference signal is located, or may be a value range of a reference signal identifier. For example, a reference signal group 1 (the value range of the reference signal identifier is xx-yy) includes at least one reference signal of the first cell, and a reference signal group 2 (the value range of the reference signal identifier is zz-gg) includes at least one reference signal of the second cell. In this way, the terminal device may determine, based on group information of reference signals in the reference signal configuration information, a cell associated with the reference signal.

Measurement reporting configuration information includes a related configuration of measurement and reporting of the at least one reference signal of the corresponding cell. For a downlink reference signal (for example, an SSB or a CSI-RS), the measurement configuration information may include a reporting period of a measurement result, a condition that needs to be met for reporting the measurement result, a resource used for reporting the measurement result, a hysteresis factor, result filtering information, and the like. The resource used for reporting the measurement result is a resource of the corresponding cell.

Beam configuration information includes downlink beam indication information and/or uplink beam indication information of a corresponding cell, where the downlink beam indication information indicates at least one downlink beam direction of the corresponding cell, and the uplink beam indication information indicates at least one uplink beam direction of the corresponding cell. For example, the downlink beam indication information may include TCI status information of at least one physical channel of the corresponding cell, and the TCI status information may include a TCI status identifier and a QCL relationship associated with the TCI status. The uplink beam indication information may include a reference signal identifier corresponding to at least one uplink beam, for example, an SRS identifier, an SSB identifier, or a CSI-RS identifier.

Optionally, the beam configuration information may further include information indicating an association relationship between the downlink beam indication information/uplink beam indication information and the corresponding cell, so that the terminal device identifies specific downlink beam indication information/uplink beam indication information as beam indication information of a specific cell. For example, the association relationship between the downlink beam indication information/uplink beam indication information and the corresponding cell may be indicated in the following two manners:

Manner 1: Explicit cell indication. The beam configuration information includes a cell identifier of a cell associated with the downlink beam indication information/or the uplink beam indication information. The downlink beam indication information is used as an example. The TCI status information may be represented as a TCI status identifier, and a QCL relationship {reference signal, cell identifier} indicates that there is a QCL relationship between a TCI status and a reference signal of a cell. In this way, the terminal device may determine, based on a cell identifier in the beam configuration information, a cell associated with the TCI status information. For example, if TCI status information 1 is associated with the first cell, and TCI status information 2 is associated with the second cell, beam configuration information of the first cell may include a cell identifier of the first cell, and beam configuration information of the second cell may include a cell identifier of the second cell.

Manner 2: Implicit cell indication. The downlink beam indication information/uplink beam indication information is grouped based on an associated cell. The beam configuration information includes group information of the uplink beam indication information/downlink beam indication information. The group information may be an identifier of a group to which the uplink beam indication information/downlink beam indication information belongs, or may be a value range of an identifier of the uplink beam indication information/downlink beam indication information. The downlink beam indication information is used as an example. A TCI status group 1 (the value range of the TCI status identifier is xx-yy) includes TCI status information of at least one physical channel of the first cell, and a TCI status group 2 (the value range of the TCI status identifier is zz-gg) includes TCI status information of at least one physical channel of the second cell. In this way, the terminal device may determine, based on group information (for example, the group identifier or the value range of the TCI status identifier) of the TCI status information in the beam configuration information, a cell associated with the TCI status.

QCL information includes a QCL relationship between at least one physical channel and at least one reference signal of the corresponding cell, and the QCL relationship may be indicated by using a TCI status. For example, the at least one physical channel may include a PDCCH, a PDSCH, a PUCCH, a PUSCH, and the like, and the at least one reference signal may include an SSB, a CSI-RS, an SRS, and the like.

Control resource set CORESET configuration information includes a related configuration of a CORESET of the corresponding cell, for example, a CORESET identifier.

Search space SS configuration information includes a related configuration of search space of the corresponding cell, for example, an identifier of at least one associated CORESET, a start slot, a symbol, and a period.

TA configuration information includes TA information of the corresponding cell. The TA information may indicate whether a TA of the corresponding cell is 0, or may be a specific TA value of the terminal device in the corresponding cell. Optionally, the TA value may be estimated by the access network device based on an uplink reference signal sent by the terminal device.

Terminal device identification information includes identification information (for example, a cell radio network temporary identifier (cell radio network temporary identifier, C-RNTI)) allocated by the corresponding cell to the terminal device, and uniquely identifies the terminal device in the corresponding cell.

Random access resource configuration information includes a resource used for a random access process, for example, a random access preamble of the corresponding cell and a random access available slot, where the random access available slot is used to transmit the random access preamble.

PUCCH resource configuration information includes a related configuration of a PUCCH resource of the corresponding cell, and the PUCCH resource may be used to transmit a hybrid automatic repeat request acknowledgment (hybrid automatic repeat request acknowledgment, HARQ) feedback, a scheduling request, a channel state information (channel state information, CSI) measurement result, and the like.

Radio link monitoring configuration information includes radio link monitoring configuration of the corresponding cell, and is used to monitor radio link quality of the corresponding cell, and detect whether a communication link of the corresponding cell is faulty, for example, whether a radio link failure occurs.

Security-related configuration information includes a configuration, for example, data encryption and/or integrity protection of the corresponding cell, for example, includes a required key, an algorithm, or a parameter required for updating a key, and is used for encryption and/or integrity protection of data used for communication with the corresponding cell, to ensure communication security.

The first configuration information may be sent by the first access network device by using any air interface signaling such as an RRC message or a MAC message. This is not limited in this application. For example, the first access network device may carry the first configuration information in a message, for example, an RRC configuration message, an RRC setup message, an RRC resume message, or a MAC CE message, to send to the terminal device. Further, the first configuration information may be sent by using one message, or may be sent by using a plurality of messages. This is not limited in this application. That the first configuration information is sent by using a plurality of messages may mean that configuration information of different cells is sent by using different messages. For example, a group of configuration information corresponding to the first cell is sent by using one or more messages, and a group of configuration information corresponding to the second cell is sent by using another one or more messages.

In this way, after receiving the first configuration information from the first access network device, the terminal device may obtain reference signal configuration information of the first cell and reference signal configuration information of the second cell from the first configuration information, to measure the downlink reference signal of the first cell based on the reference signal configuration information of the first cell, and measure the downlink reference signal of the second cell based on the reference signal configuration information of the second cell, so as to obtain the first measurement result.

The first measurement result includes a measurement result of the downlink reference signal of the first cell by the terminal device and a measurement result of the downlink reference signal of the second cell by the terminal device. Optionally, the first measurement result may further include a cell identifier of the cell associated with the reference signal, namely, the cell identifier of the first cell and the cell identifier of the second cell.

Further, the terminal device may further obtain measurement reporting configuration information of the first cell and/or measurement reporting configuration information of the second cell, and then send the first measurement result to the first access network device or the second access network device based on the measurement reporting configuration information of the first cell and/or the measurement reporting configuration information of the second cell (for example, a measurement result reporting condition of the first cell or the second cell is met, or a measurement result reporting resource of the first cell or the second cell is used).

If an uplink reference signal is further configured in the reference signal configuration information of the first cell, the terminal device may further send the uplink reference signal of the first cell to the first access network device or the second access network device based on the reference signal configuration information of the first cell. Similarly, if an uplink reference signal is further configured in the reference signal configuration information of the second cell, the terminal device may further send the uplink reference signal of the second cell to the first access network device or the second access network device based on the reference signal configuration information of the second cell. The first access network device or the second access network device may receive an uplink reference signal of the first cell and the uplink reference signal of the second cell that are sent by the terminal device, and measure the reference signals to obtain a second measurement result.

Optionally, although the first access network device configures the foregoing configuration of the second cell by using the group of configuration information corresponding to the second cell in the first configuration information, in some possible embodiments, the terminal device cannot immediately take effect or use the configuration of the second cell, but can take effect or use the configuration of the second cell only after the first access network device or the second access network device indicates to hand over to the second cell. Further, a moment at which the configuration takes effect or is used may be after a time offset after the terminal device receives the at least one piece of beam information or the handover indication message, or after a time offset after the terminal device sends a response (for example, a HARQ feedback) of the at least one piece of beam information or the handover indication information.

Optionally, in a cross-site mobility management scenario, because the second cell is a cell served by the second access network device, before the first access network device sends the first configuration information to the terminal device, the first access network device may further exchange, with the second access network device, a group of configuration information corresponding to each cell, to enable the first access network device to provide configuration information of the second cell for the terminal device.

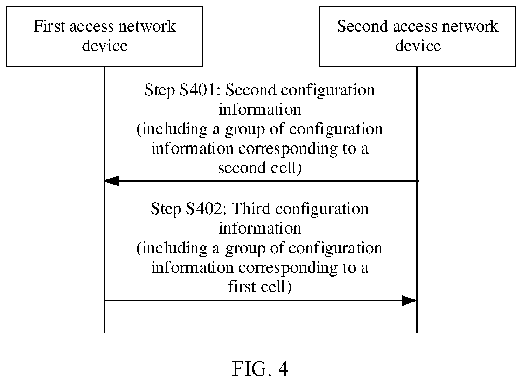

As shown in FIG. 4, in step S401, the second access network device may send second configuration information to the first access network device, where the second configuration information includes a group of configuration information corresponding to the second cell. Correspondingly, the first access network device may receive the second configuration information from the second access network device. In step S402, the first access network device may send third configuration information to the second access network device, where the third configuration information includes a group of configuration information corresponding to the first cell. Correspondingly, the second access network device may receive the third configuration information from the first access network device. It should be noted that a sequence of performing step S401 and step S402 is not specifically limited in this application.

Further, the second configuration information may further include a cell identifier of the second cell, namely, a cell identifier associated with a group of configuration information corresponding to the second cell. Further, the third configuration information may further include a cell identifier of the first cell, namely, a cell identifier associated with a group of configuration information corresponding to the first cell. For specific content of the group of configuration information corresponding to the first cell and the group of configuration information corresponding to the second cell, refer to the foregoing descriptions. Details are not described again.

The second configuration information and the third configuration information may be carried by using a message exchanged between the first access network device and the second access network device. For example, the message may be an interface message unrelated to the terminal device, such as an interface setup request message (Xn SETUP REQUEST), an interface setup response message (Xn SETUP RESPONSE), an access network device node configuration update message (NG-RAN NODE CONFIGURATION UPDATE), or an access network device node configuration response message (NG-RAN NODE CONFIGURATION UPDATE ACKNOWLEDGE), or may be an interface message related to a UE, for example, a terminal device context transfer (UE CONTEXT TRANSFER) or a terminal device context modification (UE CONTEXT MODIFICATION), this is not specifically limited in this application.

It should be noted that, as described above, content of the group of configuration information corresponding to the first cell in the first configuration information may be different from content of the group of configuration information corresponding to the second cell. Therefore, in some possible embodiments, the group of configuration information corresponding to the second cell in the first configuration information may include one or more pieces of configuration information, for example, control resource set CORESET configuration information, search space SS configuration information, timing advance TA configuration information, terminal device identification information, random access resource configuration information, PUCCH resource configuration information, radio link monitoring configuration information, or security-related configuration information. In this way, the terminal device may obtain a resource configuration of search space SS and a control resource set CORESET of the second cell based on the search space SS configuration and the control resource set CORESET configuration of the second cell, and monitor a PDCCH by using resources of the control resource set SS and the control resource set CORESET, to obtain the at least one piece of beam information or handover indication information. Optionally, the terminal device may further descramble the PDCCH by using the terminal device identification information provided by the second cell, to correctly decode the at least one piece of beam information or handover indication information.

In some other possible embodiments, the group of configuration information corresponding to the second cell in the first configuration information may alternatively not include one or more pieces of configuration information, for example, control resource set CORESET configuration information, search space SS configuration information, timing advance TA configuration information, terminal device identification information, random access resource configuration information, PUCCH resource configuration information, radio link monitoring configuration information, or security-related configuration information. Instead, when determining that the terminal device needs to be handed over to the second cell, or the second cell needs to be added, or the second cell needs to be used for data transmission, the first access network device dynamically indicates the one or more pieces of the configuration information of the second cell to the terminal device. Optionally, the one or more pieces of configuration information of the second cell may be sent to the terminal device together with the at least one piece of beam information or the handover indication information, for example, carried in one or more same messages. In this way, signaling overheads caused by a need to provide configuration information of a plurality of cells to the terminal device in advance can be avoided, and indication flexibility can be improved.

It should be noted that, in this case, because the terminal device lacks the one or more pieces of configuration information of the second cell, the terminal device may send the first measurement result to the first access network device instead of sending the first measurement result to the second access network device.

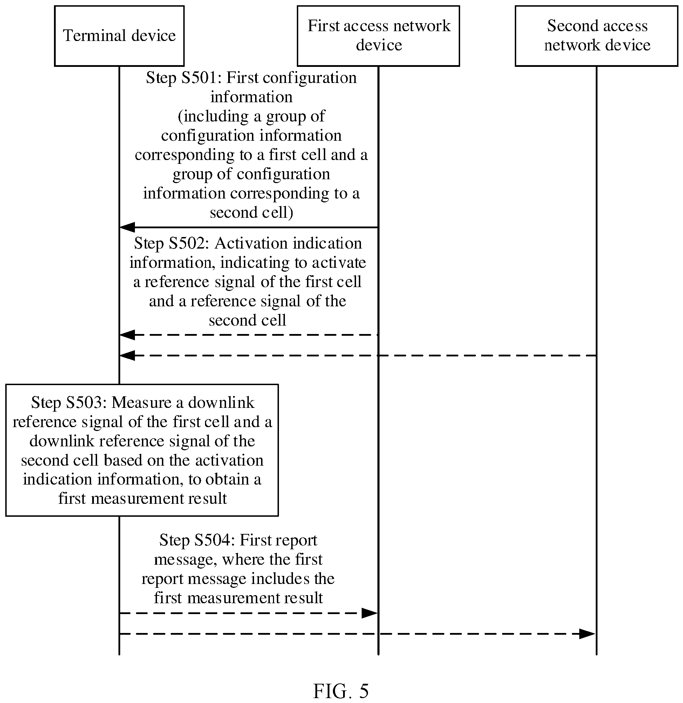

Optionally, in some possible implementations, a measurement reporting process of a terminal device may be shown in FIG. 5.

Step S501: A first access network device sends first configuration information to the terminal device, where the first configuration information is used to configure a measurement cell set for the terminal device, and the measurement cell includes a first cell and a second cell.

Correspondingly, the terminal device receives the first configuration information from the first access network device.

In this embodiment of this application, the measurement cell set may further include one or more other cells. The one or more other cells may be cells served by the first access network device, or may be cells served by another access network device. This is not limited in this application.

The first configuration information includes a group of configuration information corresponding to each cell in the measurement cell set. A group of configuration information corresponding to each cell may include one or more pieces of specific configuration information as described above. In addition, quantities and types of configuration information included in a group of configuration information corresponding to different cells may be the same or may be different. This is not limited in this application. For example, in an example, a group of configuration information corresponding to the first cell may include all the foregoing types of configuration information, and a group of configuration information corresponding to the second cell may include all the foregoing types of configuration information, or include only some types of configuration information.

Step S502: The first access network device or the second access network device sends activation indication information to the terminal device, where the activation indication information indicates to activate a reference signal of the first cell and a reference signal of the second cell.

Correspondingly, the terminal device receives the activation indication information from the first access network device or the second access network device.

Step S503: The terminal device measures a downlink reference signal of the first cell and a downlink reference signal of the second cell based on the activation indication information, to obtain a first measurement result.

In this embodiment of this application, activating a reference signal may be: for a downlink reference signal, activating measurement of the downlink reference signal and reporting of a measurement result; and for an uplink reference signal, activating sending of the uplink reference signal. The activation may also be understood as restoration, reactivation, or the like.

In this way, after receiving the activation indication information from the first access network device or the second access network device, the terminal device may determine to activate the reference signal of the first cell and the reference signal of the second cell, to measure the downlink reference signal of the first cell and the downlink reference signal of the second cell, to obtain the first measurement result. Optionally, in a co-site mobility management scenario, the terminal device may send an uplink reference signal of the first cell to the access network device by using the first cell, and may send an uplink reference signal of the second cell to the access network device by using the second cell, so that the access network device receives and measures the uplink reference signal of the first cell and the uplink reference signal of the second cell, to obtain a second measurement result. In a cross-site mobility management scenario, the terminal device may send an uplink reference signal of the first cell to the first access network device by using the first cell, and may send an uplink reference signal of the second cell to the second access network device by using the second cell, so that the first access network device and the second access network device separately receive and measure the uplink reference signal of the first cell and the uplink reference signal of the second cell, to obtain a second measurement result by exchanging respective measurement results.

It should be noted that the activation indication information may also be referred to as "activation information", "deactivation information", "activation/deactivation information", "deactivation indication information", or "activation/deactivation indication information". Optionally, the activation indication information may be used to activate some reference signals, or may be used to deactivate some other reference signals. For ease of description, the foregoing information is collectively referred to as "activation indication information" in this application.

Similarly, deactivating a reference signal may be: for a downlink reference signal, deactivating measurement of the downlink reference signal and reporting of a measurement result; and for an uplink reference signal, deactivating sending of the uplink reference signal. The deactivation may also be understood as suspension, cancellation, withdrawal, or the like.

In this embodiment of this application, the reference signal may be activated or deactivated based on a cell granularity, or may be activated or deactivated based on a reference signal granularity. It may be understood that, that the reference signal is activated based on a cell granularity may mean that all reference signals of a cell are activated or deactivated together as a whole. That the reference signal is activated based on a reference signal granularity may mean that each reference signal of a cell may be independently activated or deactivated.

When activation or deactivation is performed based on the cell granularity, in an implementation, the activation indication information may include a bitmap (bitmap) whose length is N bits, where N is a quantity of cells in a measurement reference set. The first access network device or the second access network device may indicate, by using the bitmap, cells whose reference signals are activated, and cells whose reference signals are deactivated in the measurement reference set. For example, if a value of a bit corresponding to a cell in the bitmap is 1, it indicates that a reference signal of the cell is activated; or if a value of a bit corresponding to a cell in the bitmap is 0, it indicates that a reference signal of the cell is deactivated. In another implementation, the activation indication information may include an identifier of a cell in which a reference signal needs to be activated. In this way, the terminal device may determine, based on the identifier of the cell in the activation indication information, the cell in which the reference signal needs to be activated. Optionally, when activation or deactivation is performed based on a cell granularity, if the activation indication information indicates that a reference signal of a cell is deactivated, the terminal device may disconnect or suspend a communication connection to the cell.

When activation or deactivation is performed based on a reference signal granularity, in an implementation, the activation indication information may include a two-level bitmap (bitmap). A length of a first-level bitmap is N, where N is a quantity of cells in a measurement cell set, and each bit in the first-level bitmap corresponds to one cell in the measurement cell set, and indicates whether a reference signal of the cell is activated or deactivated. There may be one or more second-level bitmaps. Each second-level bitmap corresponds to one cell that is in the measurement cell set and whose reference signal needs to be activated, and lengths of second-level bitmaps corresponding to different cells may be the same or different, which is not limited. A second-level bitmap with a length of M is used as an example. M is a quantity of reference signals of a cell corresponding to the second-level bitmap, and each bit in the second-level bitmap indicates that a reference signal of the cell is activated or deactivated. In another implementation, the activation indication information may include an identifier of a reference signal that needs to be activated. In this way, the terminal device may determine, based on the identifier of the reference signal in the activation indication information, a reference signal that needs to be activated or deactivated. Optionally, the activation indication information may further include an identifier of a cell associated with a reference signal that needs to be activated or deactivated. Optionally, when activation or deactivation is performed based on a reference signal granularity, if all reference signals of a cell are deactivated, the terminal device may disconnect or suspend a communication connection to the cell.

The activation indication information may be sent by using physical layer signaling (for example, a PDCCH), or may be sent by using a MAC CE message or an RRC message. This is not limited in this application.

Step S504: The terminal device sends a first report message to the first access network device or the second access network device, where the first report message includes the first measurement result.

Correspondingly, the first access network device or the second access network device receives the first report message from the terminal device.

In this embodiment of this application, the terminal device may obtain measurement reporting configuration information of the first cell and/or measurement reporting configuration information of the second cell in the first configuration information, and may carry the first measurement result in the first report message, to send, based on the measurement reporting configuration information of the first cell and/or the measurement reporting configuration information of the second cell, to the first access network device or the second access network device.

The first report message may be sent by the terminal device by using physical layer signaling, for example, the first measurement result is carried on a PUCCH or a PUSCH; or the first report message may be sent by using a MAC CE message or an RRC message. This is not limited in this application.

For example, the terminal device may report the first measurement result after one or more of the following trigger conditions are met:
handover indication information delivered by the first access network device is received; in the first measurement result, a signal quality of the downlink reference signal of the first cell is higher than a specified threshold; in the first measurement result, a signal quality of the downlink reference signal of the second cell is higher than the specified threshold within a time period corresponding to the hysteresis factor; in the first measurement result, the signal quality of the downlink reference signal of the second cell is higher than the signal quality of the downlink reference signal of the first cell; in the first measurement result, the signal quality of the downlink reference signal of the second cell is higher than the signal quality of the downlink reference signal of the first cell within the time period corresponding to the hysteresis factor; in the first measurement result, the signal quality of the downlink reference signal of the second cell is higher than a sum of the signal quality of the downlink reference signal of the first cell, and a bias value; and in the first measurement result, the signal quality of the downlink reference signal of the second cell is higher than a sum of the signal quality of the downlink reference signal of the first cell within the time period corresponding to the hysteresis factor, and the set bias value.

The threshold indicates a threshold value of a signal quality, and it is considered that the signal quality meets the requirement only when the signal quality is higher than the threshold value. The bias value is used to compare a difference between two signal qualities, and it is considered that a first signal quality is better only when the difference between the first signal quality and a second signal quality exceeds the bias value. The hysteresis factor is used to evaluate stability of a result, and it is considered that the result meets the requirement only when the result is always met within the hysteresis factor. Optionally, the threshold, the bias value, and the hysteresis factor may be included in the reference signal configuration information.

By setting the trigger condition for reporting the measurement result, more measurement reporting events are provided for the terminal device to measure the reference signal and report the measurement result. This can effectively reduce unnecessary neighboring cell measurement and/or measurement result reporting in a multi-cell measurement scenario, thereby effectively reducing measurement reporting overheads and reducing complexity of the terminal device.

Optionally, the terminal device may further perform a filtering process based on result filtering information in the measurement reporting configuration information of the first cell and/or the measurement reporting configuration information of the second cell, so as to consider a historical measurement result and report a filtered measurement result. This improves referenceability of the measurement result.

Optionally, a dedicated scheduling request (scheduling request, SR) SR resource may be configured for reporting the measurement result, to trigger an SR process when there is no available uplink grant resource, and send an SR by using a PUCCH, so as to notify the access network device to schedule an uplink grant resource, and send the first report message. When the terminal device sends the first report message, or receives the at least one piece of beam information or the handover indication information, the SR process may be canceled.

It can be learned from the foregoing content that, in this embodiment of this application, by sending the first configuration information, the first access network device may provide, for the terminal device in advance, configuration information, for example, reference signals and beam directions of a plurality of cells including the first cell and the second cell. In this way, the terminal device can implement multi-cell reference signal measurement, and measurement result reporting or sending. In addition, the first access network device or the second access network device can quickly determine a target cell of the terminal device and a corresponding beam direction based on the first measurement result reported by the terminal device, and indicate the target cell and the corresponding beam direction to the terminal device.

Further, because the terminal device has obtained a related configuration of the target cell by using the first configuration information, when the first access network device or the second access network device indicates a beam of the target cell by using the at least one piece of beam information or indicates, by using the handover indication information, to hand over to the target cell, the terminal device may quickly perform mobility management based on the related configuration of the target cell, to effectively shorten a handover delay.

In addition, in some cases, the first access network device may configure a large quantity of cells or reference signals for the terminal device. For example, the first access network device may configure, for the terminal device, reference signals of a cell currently accessed by the terminal device and one or more other neighboring cells. However, the terminal device does not need to measure all reference signals of all these cells and/or report measurement results. Therefore, to prevent the terminal device from performing unnecessary reference signal measurement and reporting, and reduce energy consumption of the terminal device, the first access network device or the second access network device may send the activation indication information to the terminal device, to activate a reference signal that is in preconfigured reference signals and for which measurement, and measurement result reporting or sending need to be performed by the terminal device. This effectively avoids a problem that conventional periodic measurement reporting causes large signaling overheads and terminal complexity.

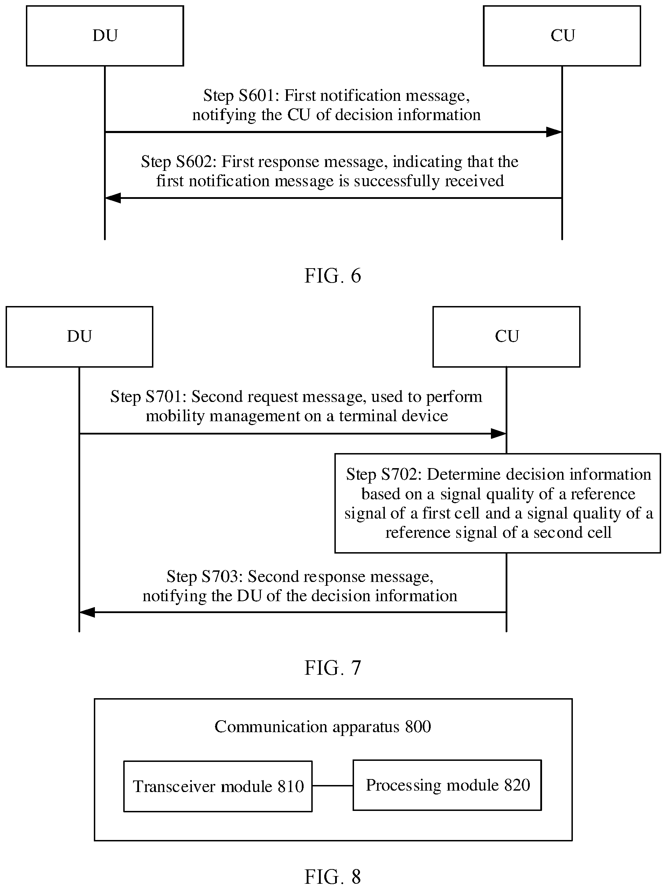

As described above, the access network device in embodiments of this application may use a CU-DU separated deployment architecture. Therefore, the access network device (for example, the first access network device or the second access network device) in the foregoing embodiments may be a CU, a DU, or a device including a CU and a DU. In this scenario, to maintain consistency between a DU and a CU on an access network side on mobility management policies of a terminal device, this application further provides mobility management methods shown in FIG. 6 and FIG. 7. Decision information about mobility management of the terminal device is transferred through interaction between the DU and the CU.

FIG. 6 is a schematic flowchart of another mobility management method according to an embodiment of this application. The method includes the following steps.

Step S601: A DU sends a first notification message to a CU, where the first notification message notifies the CU of decision information.

Correspondingly, the CU receives the first notification message from the DU.

In this embodiment of this application, the decision information indicates the terminal device to camp on a first cell and perform data transmission by using the first cell, or indicates the terminal device to hand over to a second cell, or indicates to determine a second cell as a secondary cell of the terminal device, or indicates the terminal device to camp on a first cell and perform data transmission by using a second cell, or camp on a first cell and perform data transmission by using the first cell in a beam direction of a second cell.

Before the DU sends the first notification message to the CU, according to the method described above, the DU may receive a first measurement result from the terminal device, and determine, based on the first measurement result, the decision information and the at least one piece of beam information or handover indication information.

Optionally, in a co-site mobility management scenario, the DU may further receive and measure an uplink reference signal of the first cell and an uplink reference signal of the second cell that are sent by the terminal device, to obtain a second measurement result. In this way, the DU may determine, based on the first measurement result and/or the second measurement result, the decision information and the at least one piece of beam information or the handover indication information.

Optionally, in a cross-station mobility management scenario, if the DU is a first access network device or a DU in the first access network device, the DU may receive and measure an uplink reference signal that is of the first cell and that is sent by the terminal device, to obtain a measurement result, and then exchange the measurement result with a measurement result of the second access network device (for example, a DU of the second access network device), to obtain a second measurement result. In this way, the DU may determine, based on the first measurement result and/or the second measurement result, the decision information and the at least one piece of beam information or the handover indication information.

Optionally, if the decision information indicates the terminal device to hand over to a second cell, or indicates to determine a second cell as a secondary cell of the terminal device, or indicates the terminal device to camp on a first cell and perform data transmission by using a second cell, or camp on a first cell and perform data transmission by using the first cell in a beam direction of a second cell, the first notification message includes one or more of the following information: identification information of the second cell, beam information of the second cell, or a signal quality of a reference signal of the second cell. Optionally, in a cross-station mobility management scenario, if a first access network device or a DU in the first access network device and a second access device or a DU in the second access network device are different devices, the first notification message may further include identification information of a DU in which the second cell is located, so that the CU determines the DU in which the second cell is located.

Step S602: The CU sends a first response message to the DU, where the first response message indicates that the first notification message is successfully received.

Correspondingly, the DU receives the first response message from the CU.

The first response message may also be understood as indicating that the decision information is successfully received.

Optionally, the CU may store the received decision information for mobility management of the terminal device.

Optionally, after determining the decision information, the DU may send the at least one piece of beam information or the handover indication information to the terminal device, and a moment of sending the at least one piece of beam information or the handover indication information may be before or after the first response message from the CU is received. This is not limited.

It can be learned that in the embodiment shown in FIG. 6, the DU is a decision maker that performs mobility management on the terminal device.

FIG. 7 is a schematic flowchart of another mobility management method according to an embodiment of this application. The method includes the following steps.

Step S701: A DU sends a second request message to a CU, where the second request message requests to perform mobility management on a terminal device, and the second request message includes a signal quality of a reference signal of a first cell and a signal quality of a reference signal of a second cell that are obtained by a terminal device through measurement.

Correspondingly, the CU receives the second request message from the DU.

In this embodiment of this application, before the DU sends the second request message to the CU, according to the method described above, the DU may receive a first measurement result from the terminal device. The first measurement result includes the signal quality of the reference signal of the first cell and the signal quality of the reference signal of the second cell.

Optionally, before the DU sends the second request message to the CU, the DU may receive a first measurement result from the terminal device, and determine whether the second request message needs to be initiated. For example, when the DU determines that the signal quality of the reference signal of the second cell is better than the signal quality of the reference signal of the first cell, or performs filtering based on the first measurement result, for example, performs filtering based on a historical first measurement result, the DU determines that the signal quality of the reference signal of the second cell is better than the signal quality of the reference signal of the first cell, and determines to initiate the second request message. In this way, the DU is prevented from frequently sending the second request message.

Optionally, the second request message further includes identification information of the first cell and identification information of the second cell.

Step S702: The CU determines decision information based on the signal quality of the reference signal of the first cell and the signal quality of the reference signal of the second cell.

The decision information indicates the terminal device to camp on the first cell and perform communication by using the first cell, or indicates the terminal device to hand over to the second cell, or indicates to determine the second cell as a secondary cell of the terminal device, or indicates the terminal device to camp on the first cell and perform data transmission by using the second cell, or indicates to camp on the first cell and perform data transmission by using the first cell in a beam direction of the second cell.

Optionally, the CU may further determine, based on an RRM algorithm, the decision information, for example, considering a load factor, for example, load of the first cell is heavy, and load of the second cell is light, or may consider mobility of the terminal device, for example, the terminal device may move to a coverage area of the second cell.

Step S703: The CU sends a second response message to the DU, where the second response message notifies the DU of the decision information.

Correspondingly, the DU receives the second response message from the CU.

If the decision information indicates the terminal device to hand over to the second cell, or indicates to determine the second cell as a secondary cell of the terminal device, or indicates the terminal device to camp on the first cell and perform data transmission by using the second cell, or indicates to camp on the first cell and perform data transmission by using the first cell in a beam direction of the second cell, the first response message includes one or more of the following information: identification information of the second cell, beam information of the second cell, or a signal quality of a reference signal of the second cell.

Optionally, after receiving the first response message from the CU, the DU may send the at least one piece of beam information or the handover indication information to the terminal device.

It can be learned that in the embodiment shown in FIG. 7, the CU is a decision maker that performs mobility management on the terminal device.

Embodiments of this application further provide a communication apparatus. FIG. 8 is a schematic diagram of a structure of a communication apparatus according to an embodiment of this application. The communication apparatus 800 includes a transceiver module 810 and a processing module 820.

The communication apparatus may be configured to implement functions of the terminal device according to any one of the foregoing method embodiments. For example, the communication apparatus may be a terminal device, for example, a handheld terminal device or a vehicle-mounted terminal device. Alternatively, the communication apparatus may be a chip or a circuit included in a terminal device, or an apparatus including a terminal device, for example, various types of vehicles.

The communication apparatus may be further configured to implement functions of the access network device in any one of the foregoing method embodiments. For example, the communication apparatus may be an access network device or a chip or a circuit included in an access network device.

For example, when the communication apparatus performs the operations or steps corresponding to the terminal device in the method embodiment shown in FIG. 2, the transceiver module 810 is configured to: measure a downlink reference signal of a first cell and a downlink reference signal of a second cell, and report an obtained first measurement result to an access network device, where the first cell is a cell serving the communication apparatus, the second cell is a cell other than the first cell, and the access network device is an access network device to which the first cell or the second cell belongs. The transceiver module 810 is further configured to receive at least one piece of beam information from the access network device, where the at least one piece of beam information includes beam information of the first cell and/or the second cell. The processing module 820 is configured to perform mobility management based on the at least one piece of beam information.

When the communication apparatus performs the operations or steps corresponding to the access network device in the method embodiment shown in FIG. 2, the transceiver module 810 is configured to receive a first measurement result obtained by a terminal device by measuring a downlink reference signal of a first cell and a downlink reference signal of a second cell, where the first cell is a cell serving the terminal device, the second cell is a cell other than the first cell, and the communication apparatus is an access network device to which the first cell or the second cell belongs. The processing module 820 is configured to determine, based on the first measurement result, at least one piece of beam information, where the at least one piece of beam information includes beam information of the first cell and/or the second cell. The transceiver module 810 is further configured to send the at least one piece of beam information to the terminal device, where the at least one piece of beam information is used by the terminal device to perform mobility management.

When the communication apparatus performs the operations or steps corresponding to the DU in the method embodiment shown in FIG. 6, the processing module 820 is configured to determine decision information. The transceiver module 810 is configured to send a first notification message to a CU. The first notification message notifies the CU of the decision information, the decision information indicates the terminal device to camp on the first cell and perform data transmission by using the first cell, or indicates the terminal device to hand over to the second cell, or indicates to determine the second cell as a secondary cell of the terminal device, or indicates the terminal device to camp on the first cell and perform data transmission by using the second cell, or indicates the terminal device to camp on the first cell and perform data transmission by using the first cell in a beam direction of the second cell, the first cell is a cell serving the terminal device, and the second cell is a cell other than the first cell. The transceiver module 810 is further configured to receive a first response message from the CU, where the first response message indicates that the first notification message is successfully received.

When the communication apparatus performs the operations or steps corresponding to the CU in the method embodiment shown in FIG. 6, the transceiver module 810 is configured to receive a first notification message from a DU. The first notification message notifies the CU of the decision information, the decision information indicates the terminal device to camp on the first cell and perform data transmission by using the first cell, or indicates the terminal device to hand over to the second cell, or indicates to determine the second cell as a secondary cell of the terminal device, or indicates the terminal device to camp on the first cell and perform data transmission by using the second cell, or indicates the terminal device to camp on the first cell and perform data transmission by using the first cell in a beam direction of the second cell, the first cell is a cell serving the terminal device, and the second cell is a cell other than the first cell. The processing module 820 is configured to send a first response message to the DU by using the transceiver module 810, where the first response message indicates that the first notification message is successfully received.

When the communication apparatus performs the operations or steps corresponding to the DU in the method embodiment shown in FIG. 7, the processing module 820 is configured to send a second request message to a CU by using the transceiver module 810. The second request message requests to perform mobility management on a terminal device, the second request message includes a signal quality of a reference signal of a first cell and a signal quality of a reference signal of a second cell, the first cell is a cell serving the terminal device, and the second cell is a cell other than the first cell. The transceiver module 810 is configured to receive a second response message from the CU, where the second response message notifies the DU of decision information, and the decision information indicates the terminal device to camp on the first cell and perform communication by using the first cell, or indicates the terminal device to hand over to the second cell, or indicates to determine the second cell as a secondary cell of the terminal device, or indicates the terminal device to camp on the first cell and perform data transmission by using the second cell, or indicates the terminal device to camp on the first cell and perform data transmission by using the first cell in a beam direction of the second cell.

When the communication apparatus performs the operations or steps corresponding to the CU in the method embodiment shown in FIG. 7, the transceiver module 810 is configured to receive a second request message from a DU, where the second request message requests to perform mobility management on a terminal device, the second request message includes a signal quality of a reference signal of a first cell and a signal quality of a reference signal of a second cell, the first cell is a cell serving the terminal device, and the second cell is a cell other than the first cell. The processing module 820 is configured to determine, based on the signal quality of the reference signal of the first cell and the signal quality of the reference signal of the second cell, decision information, where the decision information indicates the terminal device to camp on the first cell and perform data transmission by using the first cell, or indicates the terminal device to hand over to the second cell, or indicates to determine the second cell as a secondary cell of the terminal device, or indicates the terminal device to camp on the first cell and perform data transmission by using the second cell, or indicates the terminal device to camp on the first cell and perform data transmission by using the first cell in a beam direction of the second cell. The transceiver module 810 is further configured to send a second response message to the DU, where the first response message notifies the DU of the decision information.

The processing module 820 in the communication apparatus may be implemented by at least one processor or a processor-related circuit component, and the transceiver module 810 may be implemented by at least one transceiver, a transceiver-related circuit component, or a communication interface. Operations and/or functions of the modules in the communication apparatus are respectively used to implement the corresponding procedures of the methods shown in FIG. 2 to FIG. 7. For brevity, details are not described herein again. Optionally, the communication apparatus may further include a storage module. The storage module may be configured to store data and/or instructions. The transceiver module 810 and/or the processing module 820 may read the data and/or the instructions in the storage module, to enable the communication apparatus to implement a corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

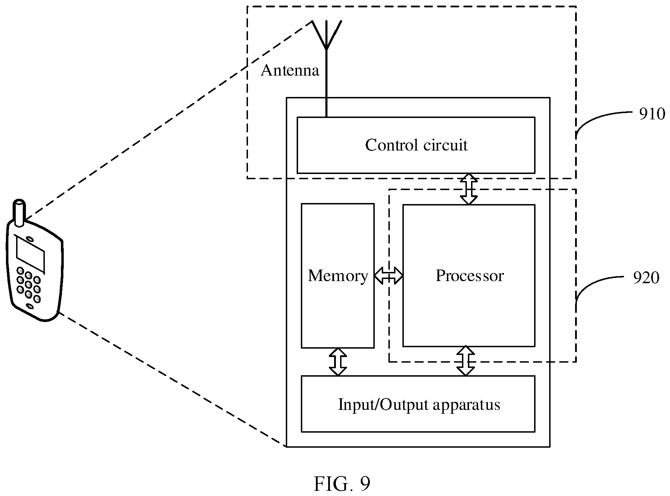

FIG. 9 is another schematic diagram of a structure of a communication apparatus according to an embodiment of this application. The communication apparatus may be specifically a terminal device. The communication apparatus may be configured to implement functions of the terminal device according to any one of the foregoing method embodiments. For ease of understanding and illustration, in FIG. 9, a mobile phone is used as an example of the terminal device. As shown in FIG. 9, the terminal device includes a processor, and may further include a memory. Certainly, the terminal device may further include a radio frequency circuit, an antenna, an input/output apparatus, and the like. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 9 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and a radio frequency circuit that have a transceiver function may be considered as a transceiver unit of the terminal device, and a processor that has a processing function may be considered as a processing unit of the terminal device. As shown in FIG. 9, the terminal device includes a transceiver unit 910 and a processing unit 920. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 910 and that is configured to implement a receiving function may be considered as a receiving unit, and a component that is in the transceiver unit 910 and that is configured to implement a sending function may be considered as a sending unit, in other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like. It should be understood that the transceiver unit 910 is configured to perform a sending operation and a receiving operation on a terminal side in the foregoing method embodiments, and the processing unit 920 is configured to perform an operation other than the receiving/sending operation of the terminal in the foregoing method embodiments.

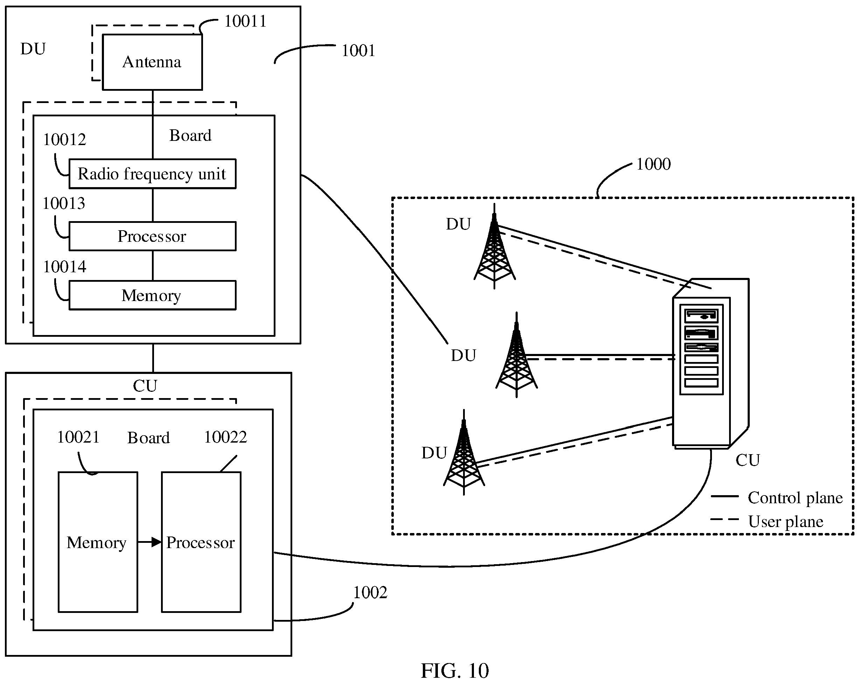

FIG. 10 is a schematic diagram of another structure of a communication apparatus according to an embodiment of this application. The communication apparatus may be specifically a network device, for example, a base station, configured to implement the function of the access network device in any one of the foregoing method embodiments.

The network device 1000 includes one or more DUs 1001 and one or more CUs 1002. The DU 1001 may include at least one antenna 10011, at least one radio frequency unit 10012, at least one processor 10013, and at least one memory 10014. The DU 1001 is mainly configured to: receive and send a radio frequency signal, perform conversion between a radio frequency signal and a baseband signal, and perform some baseband processing.

The CU 1002 may include at least one processor 10022 and at least one memory 10021. The CU 1002 is mainly configured to perform baseband processing, control the base station, and the like. The CU 1002 is a control center of the base station, and may also be referred to as a processing unit. For example, the CU 1002 may be configured to control the base station to perform operations or steps corresponding to the access network device in the methods shown in FIG. 2 to FIG. 7.

The CU 1002 and the DU 1001 may communicate with each other through an interface. A control plane (control plane, CP) interface may be Fs-C, for example, F1-C, and a user plane (user plane, UP) interface may be Fs-U, for example, F1-U. The DU 1001 and the CU 1002 may be physically disposed together, or may be physically separated (namely, a distributed base station). This is not limited.

Specifically, baseband processing on the CU and the DU may be divided based on a protocol layer of a wireless network. For example, functions of a PDCP layer and a layer above the PDCP layer are deployed on the CU, and functions of protocol layers (such as an RLC layer and a MAC layer) below the PDCP layer are deployed on the DU. For another example, the CU implements functions of an RRC layer and the PDCP layer, and the DU implements functions of the RLC layer, the MAC layer, and a physical (physical, PHY) layer.

Optionally, the network device 1000 may include one or more radio frequency units (RUs), one or more DUs, and one or more CUs. The DU may include at least one processor 10013 and at least one memory 10014, the RU may include at least one antenna 10011 and at least one radio frequency unit 10012, and the CU may include at least one processor 10022 and at least one memory 10021.

In an example, the CU 1002 may include one or more boards, and the plurality of boards may jointly support a radio access network (for example, a 5G network) of a single access standard, or may separately support radio access networks (such as an LTE network, a 5G network, or another network) of different access standards. The memory 10021 and the processor 10022 may serve one or more boards. In other words, a memory and a processor may be disposed on each board. Alternatively, a plurality of boards may share a same memory and a same processor. In addition, a necessary circuit may further be disposed on each board.

The DU 1001 may include one or more boards. A plurality of boards may jointly support a radio access network (for example, a 5G network) of a single access standard, or may separately support radio access networks (such as an LTE network, a 5G network, or another network) of different access standards. The memory 10014 and the processor 10013 may serve one or more boards. In other words, a memory and a processor may be disposed on each board. Alternatively, a plurality of boards may share a same memory and a same processor. In addition, a necessary circuit may further be disposed on each board.

An embodiment of this application further provides a chip system, including a processor. The processor is coupled to a memory. The memory is configured to store a program or instructions. When the program or the instructions are executed by the processor, the chip system is enabled to implement the method corresponding to the terminal device or the method corresponding to the network device according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium. The computer storage medium stores computer-readable instructions. When a computer reads and executes the computer-readable instructions, the computer is enabled to perform the method according to any one of the foregoing method embodiments.

An embodiment of this application further provides a computer program product. When a computer reads and executes the computer program product, the computer is enabled to perform the method according to any one of the foregoing method embodiments.

Embodiments of this application further provide a communication system. The communication system includes an access network device and at least one terminal device. The access network device and the terminal device cooperate with each other to implement the method in any one of the foregoing method embodiments. Optionally, the communication system may further include a core network device.

It should be understood that, the processor in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory, an erasable programmable read-only memory, an electrically erasable programmable read-only memory, or a flash memory. The volatile memory may be a random access memory (random access memory, RAM), used as an external cache. By way of example but not limitation, many forms of RAMs are available, such as a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that various numbers in various embodiments of this application are merely for differentiation for ease of description. Sequence numbers of the foregoing processes or steps do not mean execution sequences. The execution sequences of the processes or steps should be determined based on functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

## Claims

1. A mobility management method, wherein the method is applied to a terminal device, and the method comprises:
measuring a downlink reference signal of a first cell and a downlink reference signal of a second cell, and reporting an obtained first measurement result to an access network device, wherein the first cell is a cell serving the terminal device, the second cell is a cell other than the first cell, and the access network device is an access network device to which the first cell or the second cell belongs;
receiving at least one piece of beam information from the access network device, wherein the at least one piece of beam information comprises beam information of the first cell and/or the second cell; and
performing mobility management based on the at least one piece of beam information.

2. The method according to claim 1, wherein the method further comprises:
sending an uplink reference signal of the first cell and an uplink reference signal of the second cell to the access network device.

3. The method according to claim 1 or 2, wherein the performing mobility management based on the at least one piece of beam information comprises:
performing, based on the at least one piece of beam information, any one of the following operations:
camping on the first cell and performing data transmission by using the first cell;
handing over to the second cell;
determining the second cell as a secondary cell;
camping on the first cell and performing data transmission by using the second cell; and
camping on the first cell and performing data transmission by using the first cell in a beam direction of the second cell.

4. The method according to claim 3, wherein the performing, based on the at least one piece of beam information, any one of the following operations comprises:
if the at least one piece of beam information comprises the beam information of the second cell, handing over to the second cell, or determining the second cell as the secondary cell, or camping on the first cell and performing data transmission by using the second cell.

5. The method according to claim 4, wherein the method further comprises:
establishing a communication connection to the second cell, and communicating with the second cell in the beam direction indicated by the beam information of the second cell.

6. The method according to claim 3, wherein the performing, by the terminal device based on the at least one piece of beam information, any one of the following operations comprises:
if the at least one piece of beam information comprises the beam information of the first cell, camping on the first cell and performing data transmission by using the first cell.

7. The method according to claim 6, wherein the method further comprises:
communicating with the first cell in a beam direction indicated by the beam information of the first cell.

8. The method according to any one of claims 1 to 7, wherein the at least one piece of beam information comprises downlink beam indication information and/or uplink beam indication information.

9. The method according to any one of claims 1 to 8, wherein the method further comprises:
receiving activation indication information from the access network device, wherein the activation indication information indicates to activate a reference signal of the first cell and a reference signal of the second cell.

10. The method according to any one of claims 1 to 9, wherein the method further comprises:
receiving first configuration information from the access network device to which the first cell belongs, wherein the first configuration information comprises a group of configuration information corresponding to the first cell and a group of configuration information corresponding to the second cell; and
each group of configuration information comprises one or more of the following information of a corresponding cell:
reference signal configuration information, measurement reporting configuration information, beam configuration information, or quasi co-location QCL information.

11. The method according to claim 10, wherein the measurement reporting configuration information comprises one or more of a reference signal measurement and reporting period, a condition, a resource, a hysteresis factor, and result filtering information.

12. The method according to claim 10 or 11, wherein each group of configuration information further comprises one or more of the following information of the corresponding cell:
control resource set CORESET configuration information, search space configuration information, timing advance TA information, or identification information allocated by the corresponding cell to the terminal device.

13. The method according to any one of claims 1 to 12, wherein the method further comprises:
reporting the first measurement result after one or more of the following trigger conditions are met:
handover indication information delivered by the access network device to which the first cell belongs is received;
in the first measurement result, a signal quality of the downlink reference signal of the first cell is higher than a specified threshold;
in the first measurement result, a signal quality of the downlink reference signal of the second cell is higher than the specified threshold within a time period corresponding to the hysteresis factor;
in the first measurement result, the signal quality of the downlink reference signal of the second cell is higher than the signal quality of the downlink reference signal of the first cell;
in the first measurement result, the signal quality of the downlink reference signal of the second cell is higher than the signal quality of the downlink reference signal of the first cell within the time period corresponding to the hysteresis factor;
in the first measurement result, the signal quality of the downlink reference signal of the second cell is higher than the signal quality of the downlink reference signal of the first cell, and is higher than a specified bias value; and
in the first measurement result, the signal quality of the downlink reference signal of the second cell is higher than the signal quality of the downlink reference signal of the first cell within the time period corresponding to the hysteresis factor, and is higher than the specified bias value.

14. A mobility management method, wherein the method is applied to an access network device, and the method comprises:
receiving a first measurement result obtained by measuring, by a terminal device, a downlink reference signal of a first cell and a downlink reference signal of a second cell, wherein the first cell is a cell serving the terminal device, the second cell is a cell other than the first cell, and the access network device is an access network device to which the first cell or the second cell belongs;
determining at least one piece of beam information based on the first measurement result, wherein the at least one piece of beam information comprises beam information of the first cell and/or the second cell; and
sending the at least one piece of beam information to the terminal device, wherein the at least one piece of beam information is used by the terminal device to perform mobility management.

15. The method according to claim 14, wherein the method further comprises:
measuring an uplink reference signal of the first cell and an uplink reference signal of the second cell that are sent by the terminal device, to obtain a second measurement result; and
the determining at least one piece of beam information based on the first measurement result comprises:
determining the at least one piece of beam information based on the first measurement result and the second measurement result.

16. The method according to claim 14 or 15, wherein the at least one piece of beam information comprises downlink beam indication information and/or uplink beam indication information.

17. The method according to any one of claims 14 to 16, wherein the method further comprises:
sending activation indication information to the terminal device, wherein the activation indication information indicates to activate a reference signal of the first cell and a reference signal of the second cell.

18. The method according to any one of claims 14 to 17, wherein the access network device is the access network device to which the first cell belongs; and
the method further comprises:
sending, by using the first cell, first configuration information to the terminal device, wherein the first configuration information comprises a group of configuration information corresponding to the first cell and a group of configuration information corresponding to the second cell; and
each group of configuration information comprises one or more of the following information of a corresponding cell:
reference signal configuration information, measurement reporting configuration information, beam configuration information, or quasi co-location QCL information.

19. The method according to claim 18, wherein the measurement reporting configuration information comprises one or more of a reference signal measurement and reporting period, a condition, a resource, a hysteresis factor, and result filtering information.

20. The method according to claim 18 or 19, wherein each group of configuration information further comprises one or more of the following information of the corresponding cell:
control resource set CORESET configuration information, search space configuration information, timing advance TA information, or identification information allocated by the corresponding cell to the terminal device.

21. The method according to any one of claims 18 to 20, wherein the method further comprises:
receiving second configuration information from the access network device to which the second cell belongs, wherein the second configuration information comprises a group of configuration information corresponding to the second cell.

22. A communication apparatus, comprising a module configured to perform the method according to any one of claims 1 to 13.

23. A communication apparatus, comprising a module configured to perform the method according to any one of claims 14 to 21.

24. A communication apparatus, comprising a processor and a memory, wherein the processor is coupled to the memory, and the processor is configured to control the apparatus to implement the method according to any one of claims 1 to 13.

25. A communication apparatus, comprising a processor and a memory, wherein the processor is coupled to the memory, and the processor is configured to control the apparatus to implement the method according to any one of claims 14 to 21.

26. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 13 by using a logic circuit or executing code instructions.

27. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 14 to 21 by using a logic circuit or executing code instructions.

28. A computer-readable storage medium, wherein the storage medium stores a computer program or instructions, and when the computer program or the instructions are executed by a communication apparatus, the method according to any one of claims 1 to 13 or the method according to any one of claims 14 to 21 is implemented.

29. A communication system, comprising the communication apparatus according to any one of claims 22, 24, and 26, and the communication apparatus according to any one of claims 23, 25, and 27.

30. A computer program product, wherein the computer program product comprises instructions, and when the instructions are run on a computer, the method according to any one of claims 1 to 13 or the method according to any one of claims 14 to 21 is implemented.
